# EUROPEAN PATENT SPECIFICATION

(11) **EP 3 407 028 B1**
(45) Date of publication and mention of the grant of the patent: **02.09.2020**
(21) Application number: 17741200.4
(22) Date of filing: 05.01.2017
(51) Int. Cl.: G01D 3/08, G01D 18/00

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 19.01.2016 JP 2016008153
(43) Date of publication of application: 28.11.2018
(73) Proprietor: Sony Corporation, Tokyo 108-0075 (JP)
(72) Inventor: KIMISHIMA Masato, Tokyo 108-0075 (JP); FUKUMOTO Yasutaka, Tokyo 108-0075 (JP)
(74) Representative: MFG Patentanwälte Meyer-Wildhagen Meggle-Freund Gerhard PartG mbB
(86) International application number: PCT/JP2017/000073
(87) International publication number: WO 2017/126320

(56) References cited:
- JP-A- 2010 086 376
- JP-A- 2011 215 787
- JP-A- 2011 215 787
- JP-A- 2013 188 260
- JP-A- 2013 188 260
- JP-A- 2016 007 503
- US-A1- 2010 274 528
- US-B1- 6 757 641

## Description

### Technical Field

The present technology relates to an information processing apparatus, an information processing method, and a program, and for example, to an information processing apparatus, an information processing method, and a program that enable a user to recognize reliability of a sensor when the sensor is used to recognize a user's action.

### Background Art

Using a sensor to discriminate a user's action, for example, whether a user is in a walking state or in a state in which the user is riding a vehicle, and providing the result to the user has been proposed (for example, Patent Literature 1).

Patent Literature 2 describes a field device, which includes a sensor for sensing a process parameter, a processor for producing a measurement value as a function of the sensed process parameter, and a communication interface for transmitting an output based upon the measurement value.

Patent Literature 3 describes a load measurement system, which includes a sensor apparatus; and an information processing apparatus for processing the measurement result measured in the sensor apparatus, wherein the sensor apparatus includes a foot pressure distribution detection sensor unit.

### Citation List

### Patent Literature

Patent Literature 1: JP 2013-3649A
Patent Literature 2: US 2010/274528 A1
Patent Literature 3: JP 2013 188260 A

### Disclosure of Invention

### Technical Problem

In a case in which the user's action is discriminated using the aforementioned sensor, high precision of the sensor is a prerequisite for accurately discriminating the action. However, there are also cases in which a terminal has a sensor with insufficient precision or in which precision of the sensor is temporarily degraded for some reason, and the sensor does not necessarily have sufficient precision when the action is discriminated.

Discriminating erroneously and providing the erroneous discrimination result to the user when sufficient precision of the sensor is not obtained is not preferable. There is a possibility of an application for discriminating an action being considered to have performed the erroneous discrimination in a case in which the erroneous discrimination has occurred due to insufficient precision of the sensor, and credibility of the application is degraded.

The present technology has been made in view of such circumstances and is intended to enable a user to recognize that sufficient precision of a sensor has not been obtained when such a situation has occurred.

### Solution to Problem

According to a first aspect, the invention provides an information processing apparatus in accordance with independent claim 1. According to a second aspect, the invention provides an information processing method in accordance with independent claim 11. According to a third aspect, the invention provides a computer program in accordance with independent claim 12. Further aspects of the invention are set forth in the dependent claims, the drawings and the following description.

An information processing apparatus according to an aspect of the present technology includes: a sensor; a processing unit that performs processing using data from the sensor; a determination unit that determines whether or not precision of the sensor has been degraded; and a notification unit that notifies a user that the precision of the sensor has been degraded in a case in which it is determined that the precision of the sensor has been degraded.

An information processing method according to an aspect of the present technology is an information processing method for an information processing apparatus including a sensor, the information processing method including the steps of: performing processing using data from the sensor; determining whether or not precision of the sensor has been degraded; and notifying a user that the precision of the sensor has been degraded in a case in which it is determined that the precision of the sensor has been degraded.

A program according to an aspect of the present technology is a program for causing a computer to execute processing, the computer controlling an information processing apparatus including a sensor, the processing including the steps of: performing processing using data from the sensor; determining whether or not precision of the sensor has been degraded; and notifying a user that the precision of the sensor has been degraded in a case in which it is determined that the precision of the sensor has been degraded.

According to an information processing apparatus, an information processing method, and a program of an aspect of the present technology, processing using data from a sensor is performed, it is determined whether or not precision of the sensor has been degraded, and a user is notified that the precision of the sensor has been degraded when it is determined that the precision of the sensor has been degraded.

### Advantageous Effects of Invention

According to the aspect of the present technology, it is possible to enable the user to recognize that sufficient precision of the sensor has not been obtained when such a situation has occurred.

Note that the advantageous effects described here are not necessarily limited and may be any of the advantageous effects described in the present disclosure.

### Brief Description of Drawings

[FIG. 1] FIG. 1 is a diagram for explaining a configuration of a system
[FIG. 2] FIG. 2 is a diagram illustrating a configuration of an embodiment of a terminal to which the present technology is applied.
[FIG. 3] FIG. 3 is a diagram for explaining an abnormality of a sensor.
[FIG. 4] FIG. 4 is a flowchart for explaining operations of the system.
[FIG. 5] FIG. 5 is a flowchart for explaining first display processing of reliability of the sensor.
[FIG. 6] FIG. 6 is a diagram illustrating an example of a screen displayed on a display unit.
[FIG. 7] FIG. 7 is a diagram illustrating another example of the screen displayed on the display unit.
[FIG. 8] FIG. 8 is a diagram illustrating another example of the screen displayed on the display unit.
[FIG. 9] FIG. 9 is a flowchart for explaining second display processing of reliability of the sensor.
[FIG. 10] FIG. 10 is a flowchart for explaining third display processing of reliability of the sensor.
[FIG. 11] FIG. 11 is a diagram illustrating another example of the screen displayed on the display unit.
[FIG. 12] FIG. 12 is a diagram illustrating another example of the screen displayed on the display unit.
[FIG. 13] FIG. 13 is a diagram illustrating another example of the screen displayed on the display unit.
[FIG. 14] FIG. 14 is a diagram illustrating another example of the screen displayed on the display unit.
[FIG. 15] FIG. 15 is a diagram illustrating another example of the screen displayed on the display unit.
[FIG. 16] FIG. 16 is a flowchart for explaining fourth display processing of reliability of the sensor.
[FIG. 17] FIG. 17 is a diagram illustrating another example of the screen displayed on the display unit.
[FIG. 18] FIG. 18 is a diagram illustrating another example of the screen displayed on the display unit.
[FIG. 19] FIG. 19 is a diagram illustrating another example of the screen displayed on the display unit.
[FIG. 20] FIG. 20 is a diagram illustrating another example of the screen displayed on the display unit.
[FIG. 21] FIG. 21 is a diagram illustrating another example of the screen displayed on the display unit.
[FIG. 22] FIG. 22 is a flowchart for explaining fifth display processing of reliability of the sensor.
[FIG. 23] FIG. 23 is a flowchart for explaining sixth display processing of reliability of the sensor.
[FIG. 24] FIG. 24 is a diagram illustrating another example of the screen displayed on the display unit.
[FIG. 25] FIG. 25 is a diagram illustrating another example of the screen displayed on the display unit.
[FIG. 26] FIG. 26 is a diagram illustrating another example of the screen displayed on the display unit.
[FIG. 27] FIG. 27 is a diagram illustrating another example of the screen displayed on the display unit.
[FIG. 28] FIG. 28 is a flowchart for explaining seventh display processing of reliability of the sensor.
[FIG. 29] FIG. 29 is a diagram illustrating another example of the screen displayed on the display unit.
[FIG. 30] FIG. 30 is a diagram illustrating another example of the screen displayed on the display unit.
[FIG. 31] FIG. 31 is a diagram for explaining a plurality of applications using the sensor.
[FIG. 32] FIG. 32 is a flowchart for explaining reliability determination processing for each application.
[FIG. 33] FIG. 33 is a diagram illustrating another example of the screen displayed on the display unit.
[FIG. 34] FIG. 34 is a diagram illustrating another example of the screen displayed on the display unit.
[FIG. 35] FIG. 35 is a diagram illustrating another example of the screen displayed on the display unit.
[FIG. 36] FIG. 36 is a flowchart for explaining first precision measurement processing for the sensor.
[FIG. 37] FIG. 37 is a diagram illustrating another example of the screen displayed on the display unit.
[FIG. 38] FIG. 38 is a flowchart for explaining second precision measurement processing for the sensor.
[FIG. 39] FIG. 39 is a diagram illustrating another example of the screen displayed on the display unit.
[FIG. 40] FIG. 40 is a flowchart for explaining first recommendation processing of applications.
[FIG. 41] FIG. 41 is a diagram illustrating another example of the screen displayed on the display unit.
[FIG. 42] FIG. 42 is a diagram illustrating another example of the screen displayed on the display unit.
[FIG. 43] FIG. 43 is a diagram illustrating another example of the screen displayed on the display unit.
[FIG. 44] FIG. 44 is a flowchart for explaining second recommendation processing of applications.
[FIG. 45] FIG. 45 is a diagram for explaining a configuration of an information processing apparatus.

### Mode(s) for Carrying Out the Invention

Hereinafter, an embodiment for implementing the present technology (hereinafter referred to as an embodiment) will be described.

### <Configuration of system>

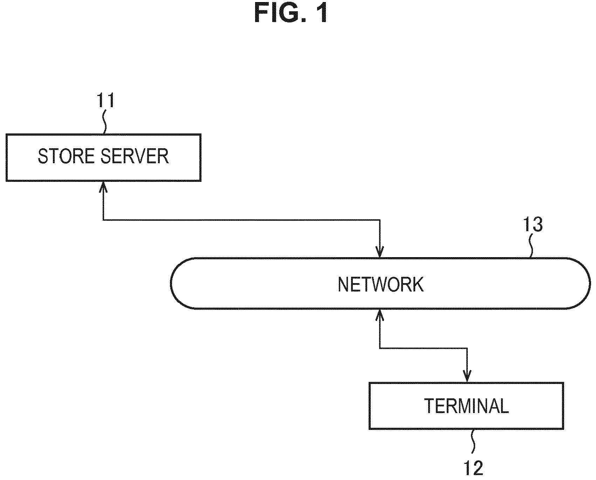

FIG. 1 is a diagram illustrating a configuration of an embodiment of a system that includes a terminal to which the present technology is applied. The system illustrated in FIG. 1 has a configuration including a store server 11, a terminal 12, and a network 13.

The system illustrated in FIG. 1 is a system related to a case in which a predetermined application is downloaded from the store server 11 to the terminal 12 via the network 13 and the downloaded application is activated (used) in the terminal 12.

The store server 11 is a device on a side on which the application is distributed. The application may be distributed with or without charge. The terminal 12 is a personal computer, a mobile phone (including a smartphone), a mobile terminal (including a device attached to a part of a body or clothing, a device accommodated in a bag, or the like), or the like.

The network 13 is a wired network, a wireless network, the Internet, a local area network (LAN), or the like, and the store server 11 and the terminal 12 have configurations with which data (applications) can be exchanged via the network 13.

### <Configuration of terminal>

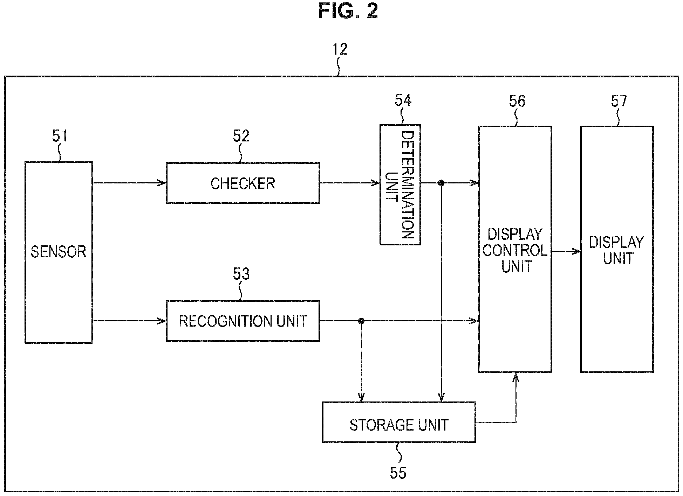

FIG. 2 is a diagram for explaining a configuration (functions) of the terminal 12. The terminal 12 downloads a predetermined application from the store server 11 and executes processing based on the downloaded predetermined application as described above. Note that, although the description will continue on the assumption that the application is downloaded from the store server 11 and the processing is executed on the side of the terminal 12, it is also possible to apply a cloud system or the like, and the present technology can be applied even in a case in which the cloud system or the like is applied.

Here, the description will continue with reference to an example case in which the predetermined application downloaded on the side of the terminal 12 is an application that performs processing using data from the sensor provided in the terminal 12. In addition, a case of an application that recognizes (discriminates) a user's action using the data from the sensor will be described as an example.

In addition, the user's action is an action such as riding in a vehicle, walking, or being still (sleeping or sitting). In addition, the user's action also includes a gesture or the like. The application is one application or a plurality of applications that execute processing of discriminating these actions. In addition, the application includes an application of performing processing using the discriminated user's action, for example, processing of identifying coordinates of a destination of movement as a result of a user's walking action.

The terminal 12 illustrated in FIG. 2 has a configuration including a sensor 51, a checker 52, a recognition unit 53, a determination unit 54, a storage unit 55, a display control unit 56, and a display unit 57.

The sensor 51 is an acceleration sensor, a gyro sensor, a touch sensor, or the like. In addition, a sensor such as a thermometer or a barometer may be included.

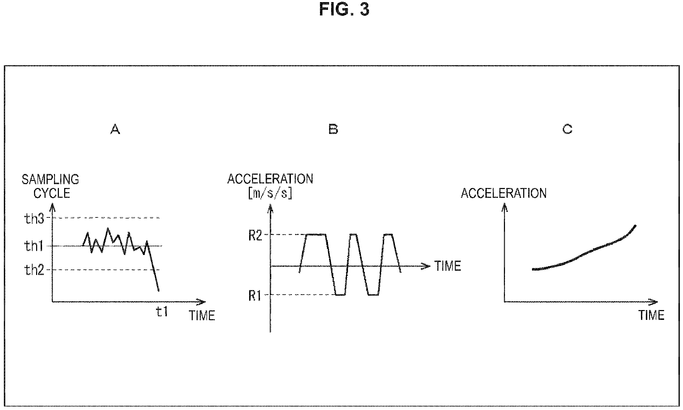

The checker 52 checks an item related to precision of the sensor 51. The item to be checked for precision of the sensor 51 is, for example, an item of checking a target as illustrated in FIG. 3.

A of FIG. 3 illustrates a case in which an abnormality of a timestamp is regarded as a target. The vertical axis of the graph illustrated in A of FIG. 3 represents a sampling cycle, and the horizontal axis represents an elapsed time. A reference value th1 represented by the solid line in A of FIG. 3 is an accurate sampling cycle (desired sampling cycle). The reference value th1 is set to the center, a value that is less than the reference value th1 is set to a threshold value th2, and a value that is greater than the threshold value th1 is set to a threshold value th3.

If a sampling frequency is equal to or greater than the threshold value th2 and is equal to or less than the threshold value th3, the cycle is regarded as being within an allowable range, and the sampling frequency is determined to be normal. However, in a case in which the sampling frequency becomes equal to or less than the threshold value th2 at a time t1 in A of FIG. 3, for example, the sampling frequency is determined not to be normal. Whether or not such a desired sampling frequency is satisfied is regarded as one evaluation item related to the precision of the sensor 51 and is checked.

There is a possibility of precision required for the sampling frequency differing depending on the application. In other words, there is a possibility of values regarded as the threshold values (the threshold value th2 and the threshold value th3) differing depending on the application. In a case in which a required sampling frequency differs depending on the application, the sampling frequency during the determination is within a required range for an application A but outside the required range for an application B in some cases. Therefore, the determination is performed using an allowable range of the sampling frequency in accordance with the application.

B of FIG. 3 illustrates a case in which an abnormality of a value is targeted. There are cases in which a measurement range is set for the sensor 51. B of FIG. 3 illustrates a case in which a measurement range of an acceleration sensor is equal to or greater than R1 and equal to or less than R2, for example. In a case in which an acceleration measured by the acceleration sensor is equal to or less than the range R1 or equal to or greater than the range R2, the measurement range is not met, the value is saturated, and an accurate measurement result is not output.

For example, if the terminal 12 in which the acceleration sensor is provided is strongly shaken, there is a possibility of a measurement value falling outside a measurement range of the acceleration sensor and the value being saturated. In such a case, it is determined that the value from the acceleration sensor is abnormal (there is a possibility that the value is not normal). Whether or not the measurement is performed within such a measurement range is regarded as one of the evaluation items related to the precision of the sensor 51 and is checked.

C of FIG. 3 illustrates a case in which an abnormality of a value is targeted. There are cases in which a value from the sensor 51 is abnormal due to an offset variation in the sensor 51. For example, it is assumed that the terminal 12 in which an acceleration sensor is provided is placed on a desk in a stationary state. Although the value from the acceleration sensor is zero in such a state, there are cases in which the value varies even though the terminal 12 is in a stationary state, in other words, the value varies even though the value should be zero as illustrated in C of FIG. 3.

Whether or not there is such a variation (offset variation) is regarded as one of the evaluation items related to the precision of the sensor 51 and is checked. Note that, in determining whether or not an acceleration sensor has experienced an offset variation, it is possible to determine that the acceleration has experienced an offset variation when the acceleration sensor determines that the position has been moved while a gyro sensor determines that the position has not been moved. In this manner, it is also possible to detect an abnormality in one or a plurality of sensors by using data from a plurality of sensors and to utilize such detection of an abnormality to detect the precision of the sensor 51.

Note that the example described herein is just an example, and another abnormality of a sensor may be detected (or another abnormality of a sensor may also be detected).

Returning to the description of the terminal 12 illustrated in FIG. 2, the checker 52 detects (checks) an abnormality of the sensor 51 as described above and outputs the detection result to the determination unit 54. The determination unit 54 determines whether or not an abnormality has occurred in the sensor 51 using the detection result from the checker 52. Reliability of the sensor 51 is calculated by the detection performed by the checker 52 and the determination performed by the determination unit 54.

The reliability of the sensor 51 is assumed to be a value representing how reliable a value obtained by the sensor 51 is when the predetermined application is caused to operate. It is possible to calculate the reliability on the basis of the number of times an abnormality of a timestamp has been detected, and for example, the reliability is calculated as low in a case in which an abnormality of the timestamp is detected a large number of times, or the reliability is calculated as high in a case in which the number of times is small.

In addition, it is possible to calculate a degree to which the cycle deviates from the allowable range when the abnormality of the timestamp has been detected and to calculate the reliability on the basis of the value thereof, for example.

In addition, a total score of a plurality of abnormal events may be calculated, and the reliability may be calculated on the basis of the total score, and for example, reliability is calculated as low in a case in which no abnormality has occurred in the timestamp, the measurement range is not met, and the value is saturated.

Any method of calculating the reliability is within the scope of application of the present technology, and any method may be used as long as a value that can represent a degree of abnormality is calculated when the abnormality of the sensor 51 is detected.

The result of the determination from the determination unit 54 is supplied to the storage unit 55 and the display control unit 56. The result of the recognition performed by the recognition unit 53 is also supplied to the storage unit 55 and the display control unit 56. The recognition unit 53 recognizes a user's action using the result of sensing obtained by the sensor 51 as described above. For example, it is determined whether the user is in a moving state, a stationary state, or further, a walking state, or a state in which the user is riding in a vehicle by using a result obtained from the acceleration sensor.

Such a result of determination is output as a recognition result of the user's recognized action to the storage unit 55 and the display control unit 56.

Note that the description will continue on the assumption that the user's action to be recognized is a walking state, a state in which the user is riding in a vehicle, or the like, and the recognition unit 53 also recognize a result that has occurred due to a user's action, for example, recognizes coordinates of a movement destination when the user's position has moved due to the user walking and moving and also recognizes content of an instruction from the user (content of a gesture) as a result of the user's action of moving his/her hand.

The recognition unit 53 performs processing on the basis of a predetermined recognition algorithm. In addition, the predetermined recognition algorithm differs depending on an action recognized by the predetermined application. In addition, the precision required for the sensor 51 differs depending on the recognition algorithm.

The storage unit 55 stores the result of the determination from the determination unit 54 and the result of the recognition from the recognition unit 53 in association. The result of the determination is information indicating whether or not the sensor 51 operates normally, and the result of the recognition is information indicating the result recognized as the user's operation. Such information is stored in the storage unit 55 in association. Hereinafter, the result of the determination and the result of the recognition stored in the storage unit 55 will be appropriately described as a log.

The display control unit 56 performs processing for causing the display unit 57 to display the result of the determination from the determination unit 54 and the result of the recognition from the recognition unit 53. Alternatively, the display control unit 56 performs processing for causing the display unit 57 to display the result of the determination and the result of the recognition stored in the storage unit 55.

When the result of the recognition is displayed on the display unit 57 in real time, the display control unit 56 performs processing of causing the display unit 57 to display the result of the determination from the determination unit 54 and the result of the recognition from the recognition unit 53. When a result of recognition in the past is displayed on the display unit 57, the display control unit 56 performs processing of causing the display unit 57 to display the result of the determination and the result of the recognition stored in the storage unit 55.

A screen displayed on the display unit 57 is for display in which the result of the recognition is associated with whether or not the result of the recognition is accurate (whether or not there is a possibility that the precision of the result of the recognition is low) or display for allowing the user to recognize that there is a possibility that the precision of the result of the recognition will be degraded due to the degradation of the precision of the sensor 51 as will be described later.

### <Operation of system>

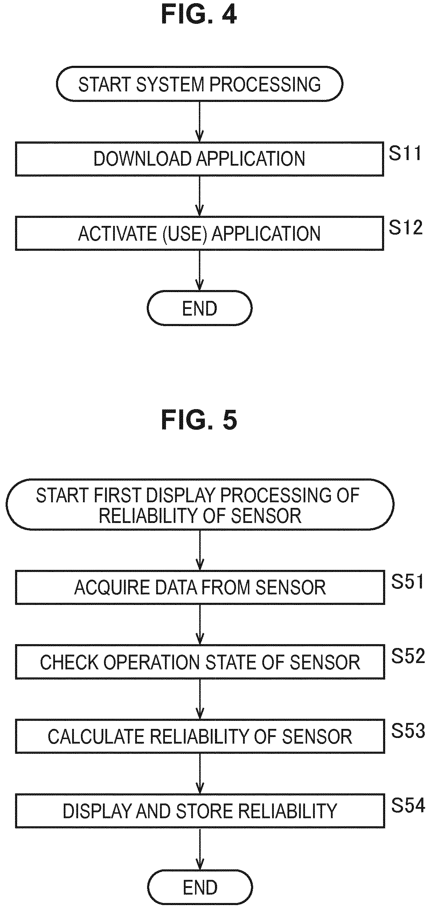

First, operations of the system illustrated in FIG. 1 will be described with reference to the flowchart illustrated in FIG. 4.

In Step S11, the terminal 12 downloads an application from the store server 11. When the application is downloaded, processing of recommending an application that is considered to operate comfortably may be performed in accordance with precision of the terminal 12, in particular, precision of the sensor. It is possible to calculate the precision (reliability) of the sensor 51 by providing the checker 52 and the determination unit 54 in the terminal 12 and to recommend the application on the basis of the precision.

In Step S12, the terminal 12 activates the downloaded application and brings the application into a usable state. In the case of an application that leaves (stores) a user's action as a log, for example, recording of the log is started by activating the application.

Note that processing of determining whether or not the terminal 12 (sensor 51) will operate comfortably may be executed before use of the application is started as will be described later. It is possible to calculate the precision (reliability) of the sensor 51 by providing the checker 52 and the determination unit 54 in the terminal 12 and to determine whether or not the sensor 51 (terminal 12) has precision required for the application by calculating the precision before the use of the application is started.

In addition, in a case in which the precision of the sensor 51 is degraded and reliability of data from the sensor 51 is degraded when the application is used, processing of notifying the user of that or the like is also executed. Hereinafter, this processing will be described in order.

### <First display processing of reliability of sensor>

Processing for presenting reliability of the sensor 51 to the user (first display processing of reliability of the sensor) will be described with reference to the flowchart illustrated in FIG. 5.

In Step S51, the checker 52 acquires data from the sensor 51. In Step S52, the checker 52 checks an operation state of the sensor 51 and outputs the result thereof to the determination unit 54.

In Step S53, the determination unit 54 determines whether or not an abnormality has occurred in the sensor 51 using the result from the checker 52 and calculates the reliability of the sensor 51 at that point.

For example, the state in which the sampling cycle is outside the allowable range described above with reference to A of FIG. 3 is a state in which processing cannot be performed by the sensor 51 due to an increase in a processing burden caused by activation of a plurality of applications, for example, in some cases. In such cases, there is a possibility that the processing burden will decrease, the sensor 51 will be able to output data at a sampling cycle within the allowable range, and the reliability of the sensor 51 will be improved by stopping activation of a predetermined application among applications that have been activated.

As described above, since there is a possibility of the reliability of the sensor 51 changing in accordance with a state of the terminal 12 at that point, the reliability of the sensor 51 at the point at which the data from the sensor 51 is acquired is calculated. Note that, in a case in which the sampling frequency is outside the allowable range, there is a possibility of data from the sensor 51 not being acquired in Step S51 and there is a possibility the reliability not being calculated.

Therefore, the reliability may be calculated (the processing of the flowchart illustrated in FIG. 5 may be started) when the data from the sensor 51 is acquired or may be calculated at a predetermined cycle, for example, at each sampling cycle. Alternatively, the reliability may be calculated at a predetermined cycle, for example, at each sampling cycle, regardless of whether or not data from the sensor 51 has been acquired. The same applies throughout the following description.

The determination result (reliability) of the determination from the determination unit 54 in Step S53 is supplied to the storage unit 55 and the display control unit 56. In Step S54, the display control unit 56 performs control for causing the display unit 57 to display the reliability, and the storage unit 55 stores the reliability. Note that the recognition processing related to the user's action is executed by the recognition unit 53 even when such processing related to the display is executed, and the recognition result of the recognition from the recognition processing is stored along with the reliability in the storage unit 55.

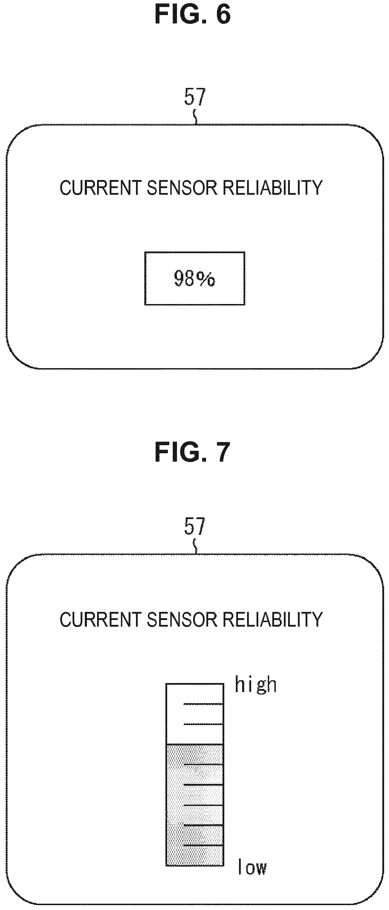

FIGS. 6 to 8 illustrate an example of reliability displayed on the display unit 57. The display example illustrated in FIG. 6 is an example in which the reliability is displayed as a numerical value. In the display example illustrated in FIG. 6, a message such as "Current sensor reliability" is displayed, and a numerical value of "98%" that is represented as a percentage is displayed. Displaying the message enables the user to recognize that the value represents the reliability of the sensor 51 and that the reliability is "98%."

Note that the display of "high," "medium," and "low" may be performed instead of the numerical value such as "98%."

The display example illustrated in FIG. 7 is an example in which the reliability is represented by an indicator. In the display example illustrated in FIG. 7, a message such as "Current sensor reliability" is displayed, and an indicator is displayed below the message. Displaying the reliability with the indicator as illustrated in FIG. 7 enables the user to intuitively recognize the precision of the sensor 51.

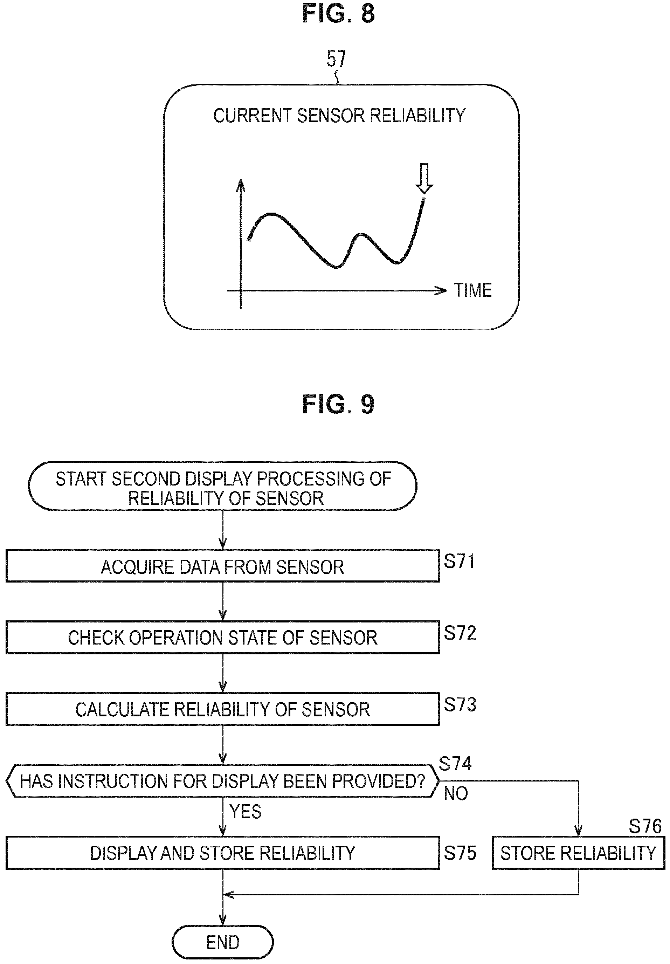

The display example illustrated in FIG. 8 is an example in which reliability is represented in a time series manner. The display example illustrated in FIG. 8 is different from the display examples illustrated in FIGS. 6 and 7 and illustrates display in which not only reliability of the sensor at that point but also reliability of the sensor from a point before that point is continuously displayed. In the display example illustrated in FIG. 8, a message such as "Current sensor reliability" is displayed, and a graph is displayed below the message. The vertical axis of the displayed graph represents reliability, and the horizontal axis represents a time.

Presenting the graph representing such a change in the reliability to the user enables the user to recognize transition of the reliability of the sensor 51 with elapse of time at a glance.

In this manner, the reliability of the sensor 51 is presented to the user. Such display may be constantly displayed on the screen of the display unit 57, for example, in a predetermined region on the upper right side of the screen, or may be displayed in a pop-up window, for example, that is displayed when a user provides an instruction.

### <Second display processing of reliability of sensor>

A case in which the reliability is displayed when the user provides an instruction will be described with reference to the flowchart illustrated in FIG. 9.

Since processing in Steps S71 to S73 in the flowchart illustrated in FIG. 9 is similar to that in Steps S51 to S53 in the flowchart illustrated in FIG. 5, description thereof will be omitted. If the reliability is calculated in Step S73, it is determined whether or not the user has provided a display instruction in Step S74.

In a case in which it is determined that the user has provided the display instruction in Step S74, the reliability is displayed and stored in Step S75. The display is performed by the same processing as that in Step S54 in the flowchart illustrated in FIG. 5, and the screen illustrated in FIGS. 6 to 8 is displayed in a pop-up window, for example.

Meanwhile, in a case in which it is determined that the user has not provided any instruction in Step S74, the reliability is stored in Step S76. In this manner, the reliability may be displayed and stored when the user has provided the instruction, and the reliability may be stored when the user has not provided the instruction. The recognition processing related to the user's action is executed by the recognition unit 53 when such processing related to display is executed.

### <Third display processing of reliability of sensor>

The reliability may be displayed in order to let the user know that the reliability has become equal to or less than a predetermined value when such a situation has occurred. Letting the user know that the reliability has become equal to or less than the predetermined value in a case in which such a situation has occurred enables the user to execute some processing, for example, processing of causing an activated application to stop in accordance with the user's determination.

In addition, in a case in which the reliability is displayed in order to let the user know that the reliability has become equal to or less than the predetermined value when such a situation has occurred, a message or the like for allowing the user to recognize that the reliability has been degraded may be displayed instead of the display of the reliability itself as illustrated in FIGS. 6 to 8. Such a case in which the display for letting the user know that the reliability has become equal to or less than the predetermined value when such a situation has occurred will be described below.

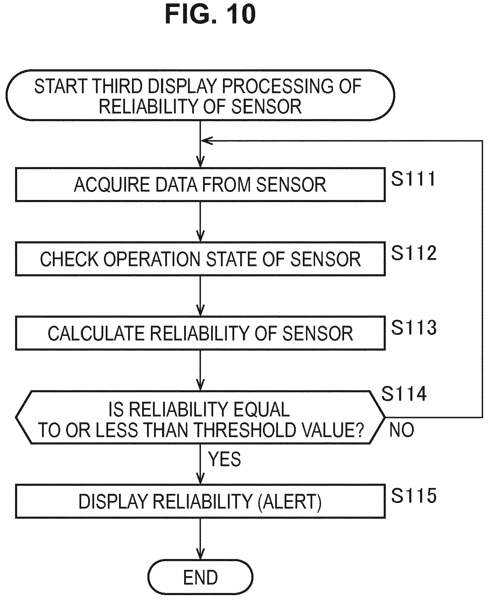

Third display processing of the reliability of the sensor will be described with reference to the flowchart illustrated in FIG. 10.

Since processing in Steps S111 to S113 in the flowchart illustrated in FIG. 10 can be performed in a manner similar to that in Steps S51 to S53 in the flowchart illustrated in FIG. 5, the description thereof will be omitted herein. If the reliability of the sensor 51 is calculated in Step S113, the determination unit 54 determines whether or not the calculated reliability is equal to or less than a predetermined threshold value in Step S114.

In a case in which it is determined that the reliability is not equal to or less than the predetermined threshold value in Step S114, in other words, in a case in which the precision of the sensor 51 is precision that does not prevent normal operations of the application (precision necessary for outputting an accurate result of recognition), the processing is returned to Step S111, and the processing in the following steps is repeated. Note that the reliability is associated with the result of the recognition from the recognition unit 53 and stored in the storage unit 55 at the point at which the reliability is calculated.

Meanwhile, in a case in which it is determined that the reliability is equal to or less than the threshold value in Step S114, in other words, in a case in which it is determined that the precision of the sensor 51 is precision that prevents normal operations of the application (precision at a level at which there is a possibility of a result of erroneous recognition being output), processing proceeds to Step S115.

In Step S115, processing for displaying the reliability (alert) on the display unit 57 is executed by the display control unit 56. A screen displayed on the display unit 57 by the processing in Step S115 may be any of the screens illustrated in FIGS. 6 to 8. That is, the display control unit 56 may let the user know that the precision of the sensor 51 has been degraded by presenting the reliability as a numerical value, an indicator, a graph, or the like.

Since the processing moves on to Step S115 in a case in which it is determined that the precision of the sensor 51 is precision that prevents normal operations of the application, a screen for allowing the user to further recognize that the precision of the sensor 51 has been degraded, for example, a screen in which a message is displayed, may be displayed instead of the screen that represents the reliability as a numerical value or the like.

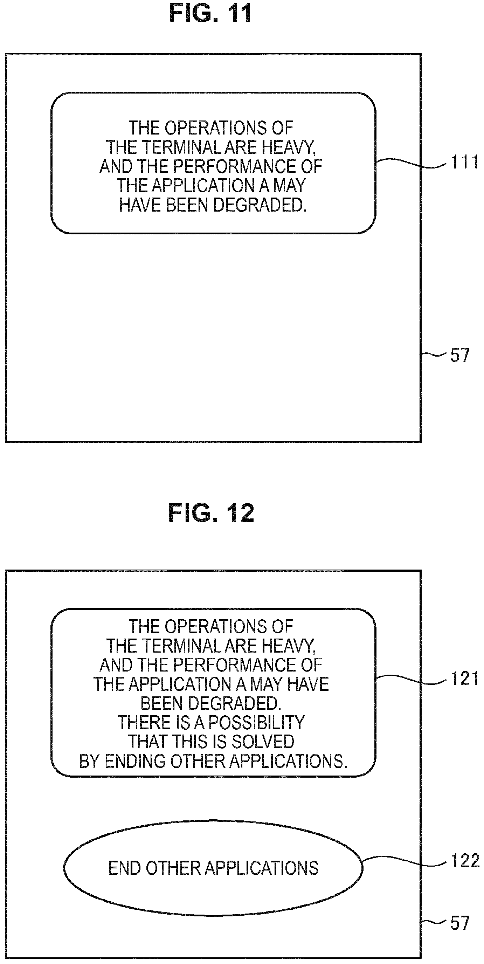

Thus, the message illustrated in FIG. 11, for example, is displayed. A window 111 is displayed in a predetermined region on the display unit 57, and a message such as "The operations of the terminal are heavy, and the performance of the application A may have been degraded" is displayed in the window 111.

This message is a message for allowing the user to recognize that, although the application (regarded as the application A) operates normally, the performance of the application A has been degraded due to an increase in a processing burden on the terminal 12.

In a case in which the application A is an application for performing action recognition, for example, this is a message for allowing the user to recognize that the precision of the action recognition of the application A that performs processing using the data from the sensor 51 has been degraded since the reliability of the sensor 51 has been degraded for a reason, such as because the data from the sensor 51 cannot be acquired due to occurrence of jitter therein or a value to be measured is outside a measurement range, although the action recognition itself by the application A is executed when such a situation has occurred.

The user can recognize that the performance of the application A has been degraded from heavy operations of the terminal by such a message being displayed. The user can take some countermeasures such as execution of processing for reducing the burden of the operations of the terminal, for example, execution of processing of stopping applications other than the application A. Thus, a message that is referred to when the user takes some countermeasures may be displayed along with the aforementioned message. Such a display example will be illustrated in FIG. 12.

In the display example illustrated in FIG. 12, a window 121 is displayed in a predetermined region on the display unit 57, and a message such as "The operations of the terminal are heavy, and the performance of the application A may have been degraded" is displayed in the window 121. In addition, a message such as "There is a possibility that this is solved by ending other applications" is also displayed in the window 121.

Displaying such a message such as "There is a possibility that this is solved by ending other applications" related to a countermeasure enables the user to recognize an abnormality that has occurred until then and also enables presentation of the countermeasure for solving the abnormality to the user.

In a case in which the user reads such a message and desires to take a countermeasure of ending other applications, the user operates a button 122 displayed in a region below the window 121. A message such as "End other applications" is displayed on the button 122, and the user sees this message and can recognize that the user can end other applications by operating the button 122.

In a case in which the user operates the button 122, applications other than the application A are ended. In a case in which a plurality of applications other than the application A have been activated, a list of the plurality of applications that have been activated may be displayed such that the user can select applications that the user desires to end.

In this manner, the message for allowing the user to recognize that the abnormality has occurred in the sensor 51 (terminal 12) and the message related to the countermeasure for solving the abnormality are displayed. In addition, display that helps execution of the countermeasure and display of the button 122 in FIG. 12 allow the user to easily take the countermeasure and enables improvement in usability.

Note that only the message related to the countermeasure for solving the abnormality can be displayed in the window 121 without display of the message for allowing the user to recognize that the abnormality has occurred in the sensor 51 (terminal 12) though not illustrated in the drawing.

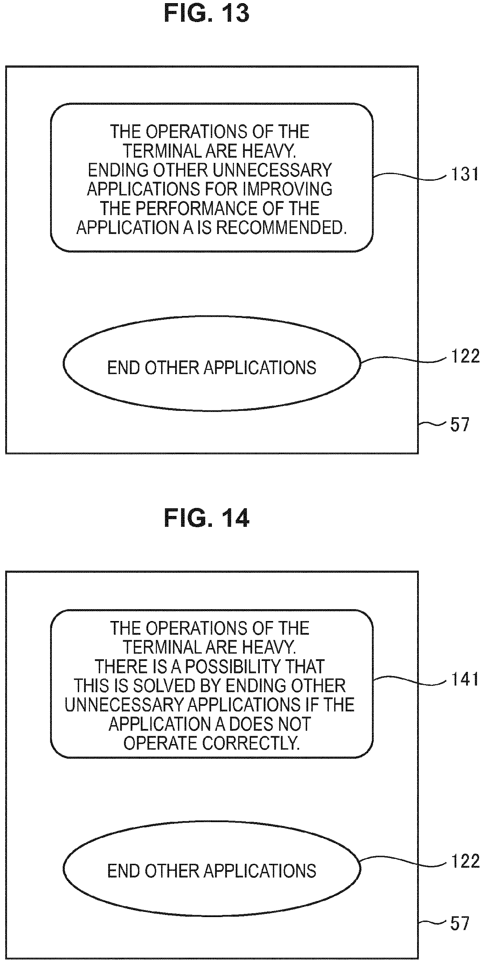

The message displayed in the window 121 is not limited to the message illustrated in FIG. 12, and other wording may be displayed. For example, the messages as illustrated in FIGS. 13 and 14 may be displayed.

In the display example illustrated in FIG. 13, a window 131 is displayed in a predetermined region in the display unit 57, and a message such as "The operations of the terminal are heavy. Ending other unnecessary applications for improving the performance of the application A is recommended." is displayed in the window 131.

In the display example illustrated in FIG. 14, a window 141 is displayed in a predetermined region of the display unit 57, and a message such as "The operations of the terminal are heavy. There is a possibility that this is solved by ending other unnecessary applications if the application A does not operate correctly." is displayed.

Although any wording may be used as wording of the message as described above, a message for allowing the user to recognize that the abnormality (degradation of performance or the like) of the sensor 51 (terminal 12) is displayed. In addition, a further countermeasure may be displayed. In addition, a further message, button, and the like that help the user may be displayed when the user executes the countermeasure.

In the processing in Step S115 (FIG. 10), processing of causing the display unit 57 to display such a message and a button is executed.

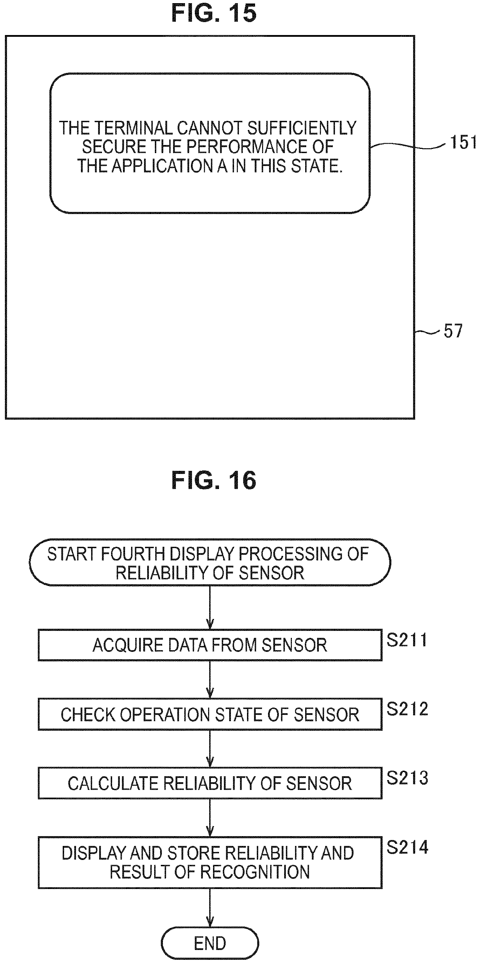

In a case in which any of the screen examples illustrated in FIGS. 12 to 14 is displayed, and the user operates the button 122, for example, applications designated by an instruction are ended. Although operations of the application A may be continuously performed in a case in which the processing burden has decreased as a result, and the sensor 51 has been brought into a state in which the sensor 51 can output data normally, the message as illustrated in FIG. 15 may be displayed on the display unit 57 in a case in which the processing burden has not sufficiently decreased, and the sensor 51 has not been brought into the state in which the sensor 51 can output data normally.

In the display example illustrated in FIG. 15, a window 151 is displayed in a predetermined region of the display unit 57, and a message such as "The terminal cannot sufficiently secure the performance of the application A in this state." is displayed in the window 151.

In a case in which the abnormality of the sensor 51 has not been solved even though a predetermined countermeasure has been taken in this manner, a message for allowing the user to recognize that the performance of the application A is not maintained since the precision of the sensor 51 (terminal 21) has been degraded is displayed.

Displaying such a message enables the user to recognize that no problem has occurred in the application and a problem has occurred on the side of the terminal 12 (hardware). Therefore, it is possible to prevent the application from being less evaluated.

In this manner, the user recognizes that the application A will operate normally if the problem is solved on the side of the terminal 12 and thinks of continuing the use of the application A even if any of the screens illustrated in FIGS. 11 to 15, for example, is displayed on the display unit 57.

However, in a case in which the screens as illustrated in FIGS. 11 to 15 are not displayed, there is a possibility that some user recognizes that the application A does not operate normally, the application A has some problem, and the user less evaluates the application A, and thinks of stopping the use of the application A.

However, according to the present technology, it is possible to prevent the application A from being less evaluated in that manner as described above.

### <Fourth display processing of reliability of sensor>

The terminal 12 (application A) performs action recognition of the user and supplies the result of the recognition to the storage unit 55 and the display control unit 56. A case in which the aforementioned reliability of the sensor 51 is provided to the user along with the result of the recognition will be described.

Fourth display processing of the reliability of the sensor will be described with reference to the flowchart illustrated in FIG. 16. Since processing in Steps S211 to S213 in the flowchart illustrated in FIG. 16 are similar to that in Steps S51 to S53 in the flowchart illustrated in FIG. 5, description thereof will be omitted.

If the reliability is calculated in Step S213, the display control unit 56 starts control for displaying the reliability and the result of the recognition on the display unit 57, and the storage unit 55 associates and stores the reliability with the result of the recognition in Step S214.

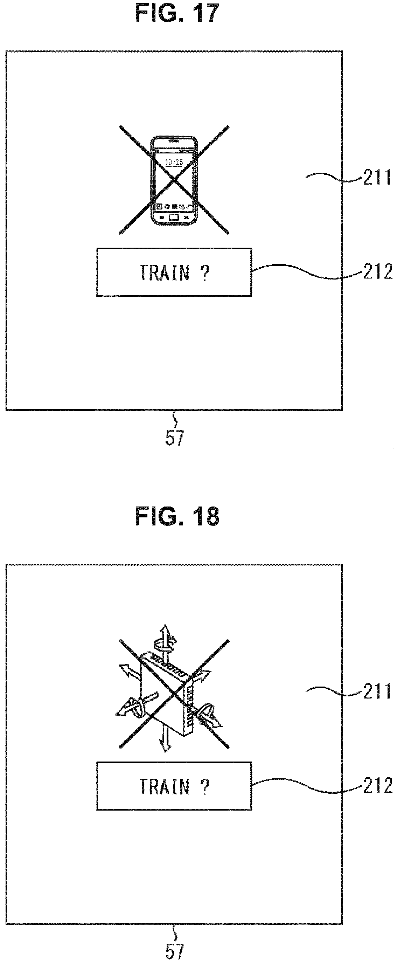

Examples of a screen displayed on the display unit 57 in the processing in Step S214 are illustrated in FIGS. 17 to 21. In the display example illustrated in FIG. 17, a picture display region 211 in which a picture is displayed and an action display region 212 in which the result of the action recognition is displayed are provided in the display unit 57.

In the action display region 212, an action that has been recognized as being performed by the user at that point in the processing of the application A is displayed. In a case in which there is a possibility that the action (the result of the recognition) displayed in the action display region 212 is not accurate due to the abnormality or the like of the sensor 51, the picture representing the terminal 12 is displayed in the picture display region 211.

In the display example illustrated in FIG. 17, "TRAIN" is displayed in the action display region 212 since the user's action has been recognized as a state in which the user is taking a train. In a case in which the reliability of the sensor 51 is low when this recognition is made, "?" is displayed, and "TRAIN?" is displayed in the action display region 212.

In addition, a picture representing the terminal 12 is displayed in the picture display region 211 in order to represent that the result of the recognition has been obtained in a state in which an abnormality has occurred on the side of the terminal 12. In addition, an X mark is superimposed on the picture, and the possibility that the abnormality has occurred in the terminal 12 is expressed in a more emphasized manner.

Although the display example illustrated in FIG. 18 is basically similar to the display example illustrated in FIG. 17, pictures displayed in the picture display region 211 are different. In the display example illustrated in FIG. 18, a picture representing the sensor 51 is displayed in the picture display region 211, and a picture on which an X mark is superimposed is displayed. In this manner, such a picture that allows the user to further recognize the possibility that an abnormality has occurred in the sensor 51 may be displayed.

The result of the recognition displayed in the action display region 212 is a result of the recognition performed by the recognition unit 53 (FIG. 2). In addition, the question mark displayed in the action display region 212 is displayed in a case in which the reliability is low on the basis of the result of the determination from the determination unit 54. Similarly, the picture is displayed in the picture display region 211 in a case in which it is determined that the reliability is low on the basis of the result of the determination from the determination unit 54.

In a case in which there is a possibility that the result of the recognition displayed in the action display region 212 is not a result of recognition with high precision due to an abnormality in the terminal 12 (sensor 51), the question mark is displayed in the section for the result of the recognition displayed in the action display region 212 in this manner. In addition, a picture from which the terminal 12 or the sensor 51 can be intuitively recognized is displayed in a state in which an X mark is superimposed thereon in the picture display region 211.

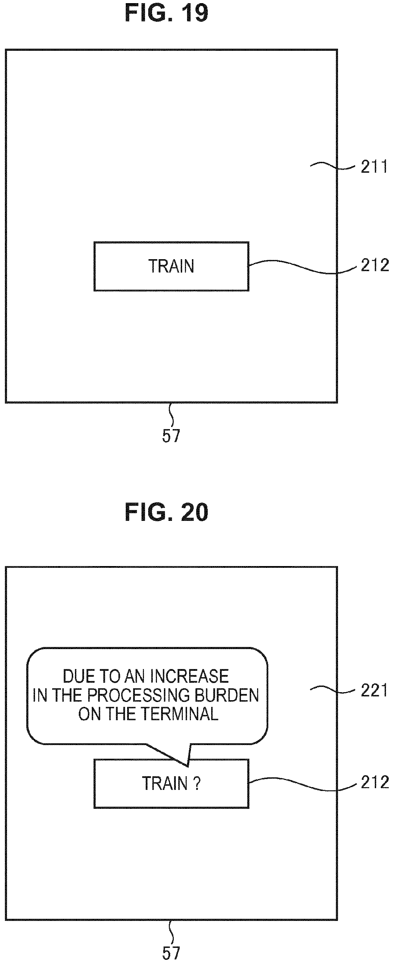

Note that in a case in which no abnormality has occurred in the terminal 12 (sensor 51) and the precision of the result of the recognition is high, a screen as illustrated in FIG. 19, for example, is displayed on the display unit 57. In the display example illustrated in FIG. 19, no picture is displayed in the picture display region 211, "TRAIN" is displayed as the result of the recognition displayed in the action display region 212, and no question mark is displayed.

Although not illustrated in the drawing, it is also possible to display the picture representing the terminal 12 (sensor 51) with no X mark in the picture display region 211.

Performing different display when an abnormality has occurred in the terminal 12 (sensor 51) and when no abnormality has occurred therein in this manner enables the user to clearly recognize whether or not an abnormality has occurred in the terminal 12 (sensor 51).

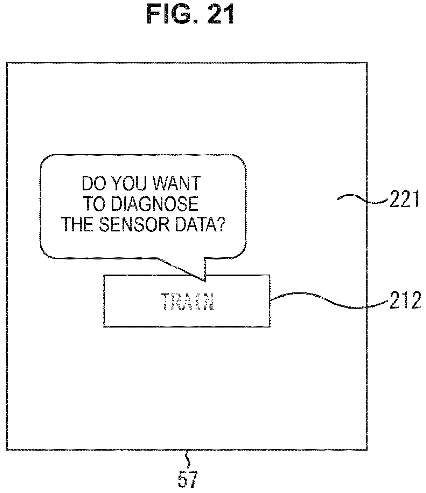

In addition, a message may be displayed instead of the picture. FIGS. 20 and 21 illustrate display examples in which a message is displayed. In the display example illustrated in FIG. 20, a message display region 221 in which a message is displayed and an action display region 212 in which the result of the action recognition is displayed are provided in the display unit 57.

In the action display region 212, the recognition result of the recognition performed by the application A is displayed in the same manner as in the action display region 212 illustrated in FIGS. 17 to 19. In a case in which there is a possibility that the action (the result of the recognition) displayed in the action display region 212 is not accurate due to an abnormality or the like in the sensor 51, a message that allows the user to recognize it is displayed in the message display region 221.

In the display example illustrated in FIG. 20, a message such as "Due to an increase in the processing burden on the terminal" is displayed in the message display region 221. That is, the question mark is displayed in the action display region 212, and a reason that there is a possibility that the precision of the result of the recognition is low is displayed in the message display region 221 in the display example illustrated in FIG. 20.

Alternatively, a message such as "Display a reason" may be displayed in the message display region 221, and in a case in which the message (a button with the message displayed thereon) is operated, the reason as illustrated in FIG. 20 may be displayed though not illustrated in the drawing.

In addition, a message that presents a countermeasure may be displayed as illustrated in FIG. 21. In the display example illustrated in FIG. 21, a message such as "Do you want to diagnose the sensor data?" is displayed in the message display region 221. In a case in which the user sees such a message, recognizes that the precision of the sensor data has been degraded, and determines to perform diagnosis related to the precision of the sensor data, this message (a button with the message displayed thereon) is operated.

In a case in which the button with the message displayed thereon is operated, "Diagnosis of the sensor data" is executed. The "diagnosis of the sensor data" is processing of diagnosing the precision (reliability) of the sensor 51 and is diagnosis executed when it is determined that the precision of the sensor 51 is poor, when the application A is activated on the terminal 12 for the first time, or the like as will be described later.

In the display example illustrated in FIG. 21, the display such as "TRAIN" displayed in the action display region 212 is displayed with a pale color. The display with the pale color expresses that there is a possibility that the precision of the result of the recognition is low. In a case in which there is a possibility that the precision of the result of the recognition is low, the display may be performed by a display method, such as performing display with the pale color in this manner, other than the method of displaying the question mark.

In processing in Step S214 (FIG. 16), any of the display examples illustrated in FIGS. 17 to 21 is performed. Note that the display examples illustrated herein are just examples, and different display may be performed.

In this manner, the reliability of the sensor 51 and the result of the recognition are presented to the user. Such display may be constantly displayed on the screen of the display unit 57, for example, or may be displayed in a pop-up window, for example, that is displayed when a user provides an instruction.

### <Fifth display processing of reliability of sensor>

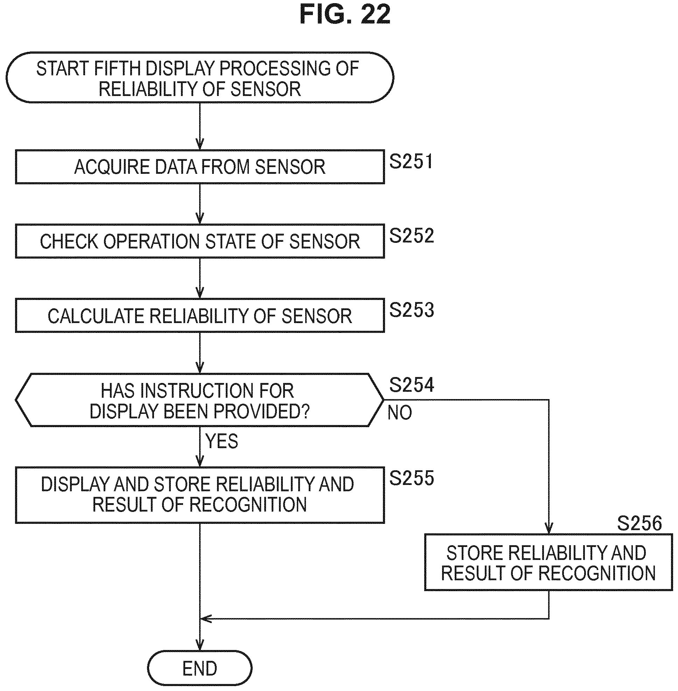

A case in which reliability is displayed when the user provides an instruction will be described with reference to the flowchart in FIG. 22.

Since processing in Steps S251 to S253 in the flowchart illustrated in FIG. 22 is similar to the processing in Steps S51 to 53 in the flowchart illustrated in FIG. 5, description thereof will be omitted. If the reliability is calculated in Step S253, it is determined whether or not an instruction for display has been provided by the user in Step S254.

In a case in which it is determined that an instruction for display has been provided by the user in Step S254, the reliability and the result of the recognition is displayed and stored in Step S255. This display is the same processing as that in Step S214 in the flowchart illustrated in FIG. 16, and the screen as illustrated in FIGS. 17 to 21 (except for FIG. 19) is displayed in a pop-up window, for example.

Meanwhile, in a case in which it is determined that the instruction for display has not been provided by the user in Step S254, the reliability and the result of the recognition are stored in Step S256. In this manner, the reliability and the result of the recognition may be displayed and stored when the instruction has been provided by the user, and the reliability and the result of the recognition may be stored when the instruction has not been provided by the user.

### <Sixth display example of reliability of sensor>

As described above, the reliability of the sensor 51 and the result of recognizing the use's action by the application A are stored in the storage unit 55 in an associated manner. It is also possible to read the reliability and the result of the recognition (log) stored in the storage unit 55 and present the reliability and the result of the recognition to the user.

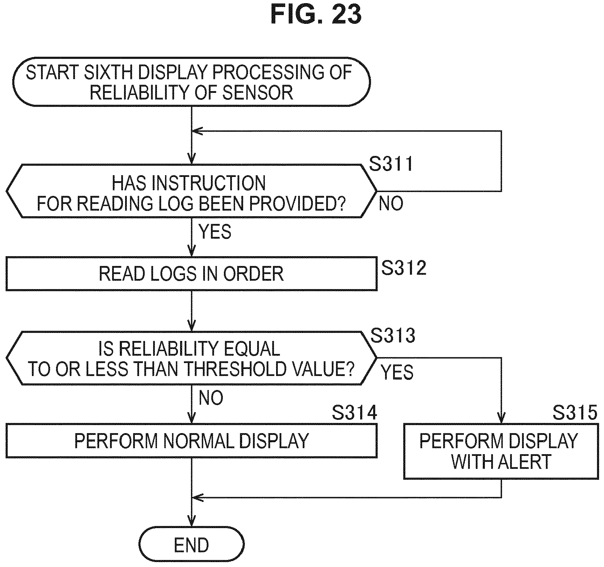

Processing of reading a log and presenting the user (six display processing of the reliability of the sensor) will be described with reference to the flowchart illustrated in FIG. 23.

In Step S311, it is determined that whether or not an instruction for reading the log stored in the storage unit 55 has been provided. The processing in Step S311 is repeated (a standby state is maintained) until it is determined that the instruction for reading the long has been provided in Step S311.

Meanwhile, in a case in which it is determined that an instruction for reading the logs has been provided in Step S311, the processing proceeds to Step S312. In Step S312, the logs are read in order from the storage unit 55. The logs to be read can be logs at and after a time designated by the user or logs before the time clock designated by the user.

It is determined whether or not the reliability included in each read log is equal to or less than a threshold value in Step S313. In a case in which the reliability included in the read log is not equal to or less than the threshold value in Step S313, the processing proceeds to Step S314. In a case in which the reliability included in the read log is equal to or less than the threshold value, the processing proceeds to Step S315.

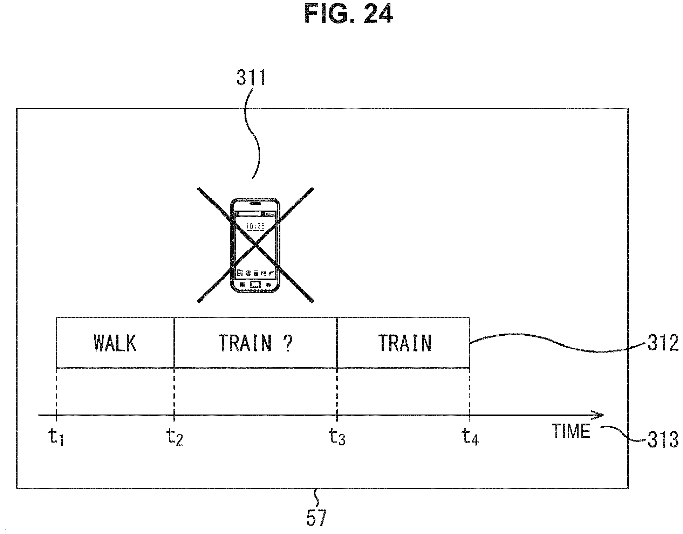

Normal display is performed in Step S314. When the processing proceeds to Step S315, display with an alert is performed. A screen displayed when such processing is performed will be described with reference to FIGS. 24 to 27.

In the display example illustrated in FIG. 24, a picture display region 311 in which a picture is displayed, an action display region 312 in which a result of action recognition is displayed, and a time axis display region 313 in which a time axis is displayed are provided in the display unit 57. The screen configuration is a configuration obtained by adding the time axis display region 313 to the screen configuration illustrated in FIG. 17.

The time axis display region 313 displays a time axis, and an action recognized as being performed by the user in a time zone represented by the time axis in the processing performed by the application A is displayed in the action display region 312. In a case in which there is a possibility that the action (the result of the recognition) displayed in the action display region 312 is not accurate due to an abnormality or the like of the sensor 51, the picture representing the terminal 12 is displayed in the picture display region 311.

Since the user's action is recognized as being walking from the time t1 to the time t2, "WALK" is displayed in a time zone from the time t1 to the time t2 in the action display region 312.

In a case in which this display is performed, a log corresponding to the time t1 to the time t2 is read from the storage unit 55 in Step S312 (FIG. 23). Then, it is determined that the reliability included in the read log is not equal to or less than the threshold value in Step S313, the processing proceeds to Step S314, and normal display is performed. The normal display means display in which no picture is displayed in the picture display region 311 with neither display of the question mark nor display with a pale color in the result of the recognition displayed in the action display region 312.

Since the user's action is recognized as taking a train from the time t2 to the time t3 (FIG. 24), "TRAIN?" is displayed in the time zone corresponding to the time t2 to the time t3 in the action display region 312. Since there is a possibility that the precision of the result of the recognition is low due to an abnormality in the terminal 12 (sensor 51), the question mark is displayed. In addition, a picture obtained by superimposing an X mark on the picture representing the terminal 12 is displayed in the picture display region 311.

In a case in which this display is performed, the log corresponding to the time t2 to the time t3 is read from the storage unit 55 in Step S312 (FIG. 23). Then, it is determined that the reliability included in the read log is equal to or less than the threshold value in Step S313, the processing proceeds to Step S315, and display with an alert is performed. The display with an alert means display in which a question mark is displayed with the result of the recognition displayed in the action display region 312, in which the result of the recognition is displayed with a pale color, or in which a picture obtained by superimposing an X mark on the picture representing the terminal 12 or the sensor 51 is displayed in the picture display region 311.

Since the user's action is recognized as taking a train from the time t3 to the time t4 (FIG. 24), "WALK" is displayed in the time zone corresponding to the time t3 to the time t4 in the action display region 312. This result of the recognition is provided by normal display since the precision thereof has been determined to be high.

In this manner, normal display is performed in a case in which the reliability included in the read log is equal to or greater than the threshold value, and the display with an alert is displayed in a case in which the reliability is equal to or less than the threshold value. Performing the display with an alert enables the user to recognize that there is a possibility that the precision of the result of the recognition is low and that the reason thereof is present on the side of the terminal 12 (sensor 51).

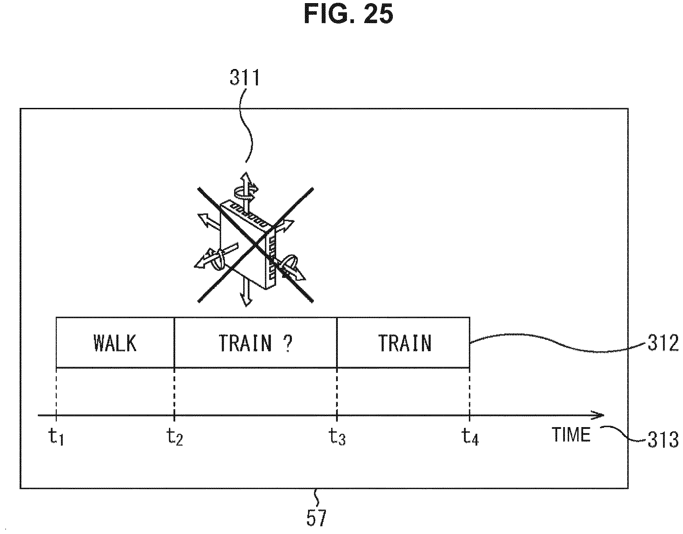

Although the display example illustrated in FIG. 25 is basically similar to the display example illustrated in FIG. 24, pictures displayed in the picture display region 311 are different. In the display example illustrated in FIG. 25, a picture representing the sensor 51 is displayed, and a picture obtained by superimposing an X mark thereon is displayed in the picture display region 211. Such a picture that allows the user to recognize that there is a possibility that an abnormality has occurred in the sensor 51 may be displayed.

Performing different display when an abnormality has occurred in the terminal 12 (sensor 51) and when an abnormality has not occurred therein in this manner enables the user to clearly recognize whether or not the abnormality has occurred in the terminal 12 (sensor 51).

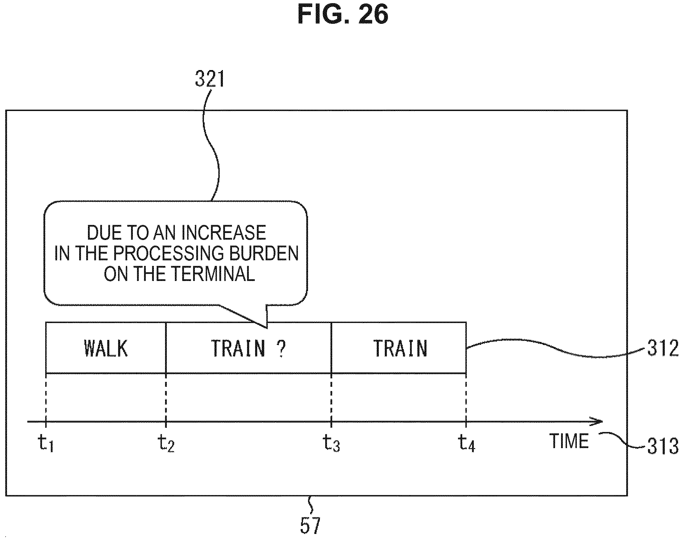

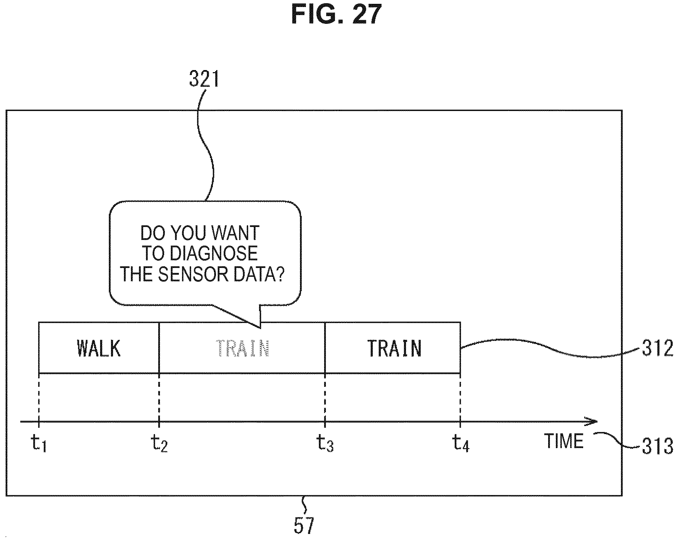

A message may be displayed in the picture that represents the terminal 12 or the sensor 51 instead of the picture with an X mark superimposed thereon. FIGS. 26 and 27 illustrated display examples in which a message is displayed. In the display example illustrated in FIG. 26, a message display region 321 in which a message is displayed, an action display region 312 in which a result of action recognition is displayed, and a time axis display region 313 in which a time axis is displayed are provided in the display unit 57.

The recognition result of the recognition performed by the application A and the time axis are displayed in the action display region 312 and the time axis display region 313, respectively, in the same manner as in the action display region 312 and the time axis display region 313 illustrated in FIGS. 24 and 25. In a case in which there is a possibility that the action (the result of the recognition) displayed in the action display region 312 is not accurate due to an abnormality or the like in the sensor 51, a message that allows the user to recognize it is displayed in the message display region 321.

In the display example illustrated in FIG. 26, a message such as "Due to an increase in the processing burden on the terminal" is displayed in the message display region 321. In the display example illustrated in FIG. 26, a question mark is displayed in the action display region 312, and a reason that there is a possibility that the precision of the result of the recognition is low is displayed as a message in the message display region 321.

Alternatively, in a case in which a message such as "Display a reason" is displayed in the message display region 321, and the message (a button with the message displayed thereon) is operated, the reason as illustrated in FIG. 26 may be displayed although not illustrated in the drawing.

In addition, a message that presents a countermeasure may be displayed as illustrated in FIG. 27. In the display example illustrated in FIG. 27, a message such as "Do you want to diagnose the sensor data?" is displayed in the message display region 321. In a case in which the user sees such a message, recognizes that there is a time zone in which the precision of the sensor data is degraded, and determines to perform diagnosis related to the precision of the sensor data, this message (a button with the message displayed thereon) is operated.

In a case in which the button with the message displayed thereon is operated, "Diagnosis of the sensor data" is executed. The "diagnosis of the sensor data" is processing of diagnosing precision (reliability) of the sensor 51 and is diagnosis executed when it is determined that the precision of the sensor 51 is poor, when the application A is activated on the terminal 12 for the first time, or the like.

Note that there is also a case in which the sensor 51 is reset by performing such diagnosis, and there is a case in which the precision of the sensor 51 is recovered by resetting the sensor 51. Therefore, if an abnormality occurs in the sensor 51 at a point in the past, it is possible to allow the user to recognize it and perform diagnosis at the current point by displaying the message such as "Do you want to diagnose the sensor data?," thereby resetting the sensor 51.

In the display example illustrated in FIG. 27, "TRAIN" displayed in the action display region 312 is displayed with a pale color in a time zone corresponding to the time t2 to the time t3. The display with the pale color expresses that there is a possibility that the precision of the result of the recognition is low. In a case in which there is a possibility that the precision of the result of the recognition is low, the display may be performed by a display method, such as performing display with the pale color in this manner, other than the method of displaying the question mark.

By the processing in Steps S314 and S315 (FIG. 23), the screen as illustrated in FIGS. 24 to 27 is displayed on the display unit 57. Note that the display examples illustrated herein are just examples, and different display may be performed.

In this manner, the reliability of the sensor 51 in the past and the result of the recognition related to the recognized user's action are presented to the user.

### <Seventh display processing of reliability of sensor>

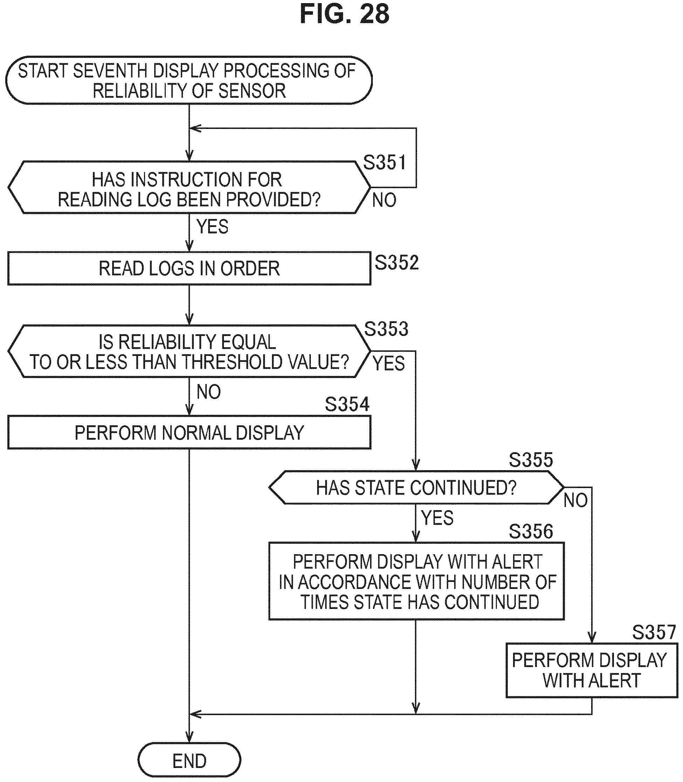

Another example of display performed when a log is read from the storage unit 55 and reliability and a result of recognition are displayed will be described with reference to the flowchart illustrated in FIG. 28 (seventh display processing of the reliability of the sensor will be described).

Since processing in Steps S351 to S354 in the flowchart illustrated in FIG. 28 is similar to the processing in Steps S311 to S314 in the flowchart illustrated in FIG. 23, description thereof will be omitted.

In a case in which the reliability included in the read log is equal to or less than the threshold value in Step S353, processing proceeds to Step S355. In Step S355, it is determined whether or not a state in which the reliability is determined to be equal to or less than the threshold value has continued.

In a case in which it is determined that the state in which the reliability is determined to be equal to or less than the threshold value has continued in Step S355, the processing proceeds to Step S356, and display with an alert in accordance with the number of times the state has continued is displayed. In a case in which it is determined that the state has not continued, the processing proceeds to Step S357, and display with an alert is performed.

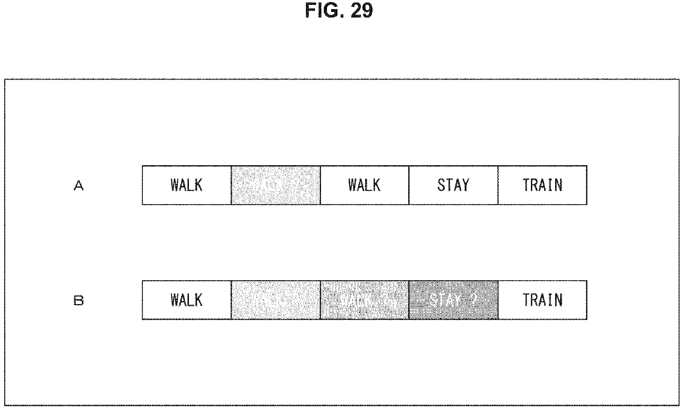

Here, the display with the alert with the number of times the state has continued, which is executed in Step S356, and the display with the alert, which is executed in Step S357, will be described with reference to FIG. 29. FIG. 29 illustrates an example of display performed on the display unit 57. The display illustrated in FIG. 29 is performed in the action display region 312 in the display example illustrated in FIG. 27, for example.

Referring to A of FIG. 29, actions such as "WALK", "WALK?", "WALK", "STAY", and "TRAIN" are displayed as results of the action recognition in this order. Since there is a possibility that the result of the second action recognition is acquired when the precision of the sensor 51 is low, "WALK?" is displayed, and the display is performed with a color in order to be distinguished from the other results of the recognition.

In a case of the display example illustrated in A of FIG. 29, it is determined that the reliability is equal to or less than the threshold value in Step S353 when the log related to the second action recognition is processed, and the processing proceeds to Step S355. It is determined that the state in which the reliability is determined to be equal to or less than the threshold value has not continued in Step S355, and the processing proceeds to Step S357.

Then, the display with an alert is performed in Step S357. This display with an alert means display with a question mark, display with a color that is different from that for the other results of the recognition (including display with a pale color or the like), or the like, and for example, this display is the display with the alert described above with reference to FIGS. 24 to 27. Note that it is a matter of course that a picture obtained by superimposing an X mark on the picture of the terminal, a message, or the like can be displayed as described above with reference to FIGS. 24 to 27 although not illustrated in FIG. 29.

When the log related to the third action recognition is processed, it is determined that the reliability is not equal to or less than the threshold value in Step S353, and the processing proceeds to Step S354. Since normal display is performed in Step S354, display with no alert such as "WALK" is performed as illustrated in A of FIG. 29.

Next, referring to B of FIG. 29, actions such as "WALK", "WALK?", "WALK?", "STAY?", and "TRAIN" are displayed in this order as results of the action recognition. Since there is a possibility that the results of the second, third, and fourth action recognition are acquired when the precision of the sensor 51 is low, "WALK?", "WALK?", and "STAY?" are displayed, and the display is performed with a color in order to be distinguished from the other results of the recognition.

In regard to the way to apply colors, different colors are applied to the second, third, and fourth results. For example, the colors are applied such that the colors gradually become thicker. The result of the third recognition is displayed with a thicker color than that for the result of the second recognition, and further, the result of the fourth recognition is displayed with a thicker color than that for the result of the third recognition. Gradually changing the colors in this manner can express the length of the period during which the precision of the sensor 51 is degraded and enable the user to recognize that such a period has continued.

Gradually changing the colors to be thicker is just an example of the way to apply the colors, and another way to apply colors may also be employed. Gradually changing the colors to be thicker can provide a feeling that a risk increases to the user. In addition, the colors may be applied such that the colors gradually become paler. Gradually changing the colors to be paler can provide an expression for allowing the user to recognize that the reliability of the sensor 51 is low and the reliability of the result of the recognition is low.

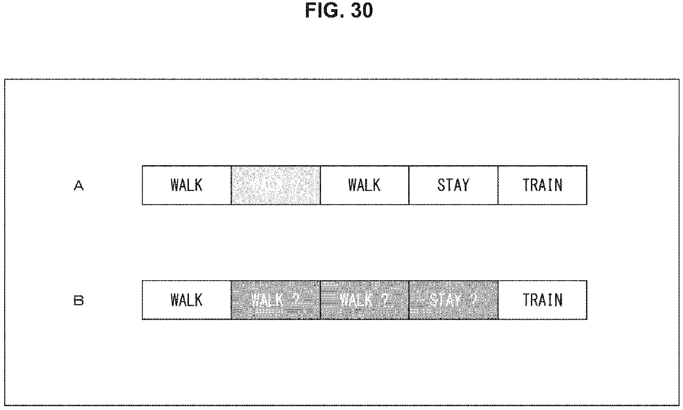

In addition, although the example in which the colors gradually change has been described herein, display colors may differ depending on a period during which the reliability is low (the number of times the state in which the reliability is determined to be equal to or less than the threshold value continues) as illustrated in FIG. 30. In the example illustrated in FIG. 30, a case in which there is only one section corresponding to the period during which the reliability is low as in A of FIG. 30 and a case in which there are three sections corresponding to the period during which the reliability is low as in B of FIG. 30 may be displayed with different colors.

In addition, the color for the three sections illustrated in B of FIG. 30 is thicker than the color for the one section illustrated in A of FIG. 30. For example, it is possible to use a pale red color for the one section illustrated in FIG. 30A and to use a thick red color for the three sections illustrated in B of FIG. 30.

As illustrated in FIGS. 29 and 30, it is possible to represent seriousness by colors (display) by changing the color for the period during which an abnormality occurs in the sensor 51 (terminal 12). That is, it is possible to consider that the state is more serious as the period during which an abnormality occurs is longer, and to express the seriousness by display with a color changed in accordance with such a period during which the abnormality occurs.

In a case of the display example illustrated in B of FIG. 29 (or B of FIG. 30), it is determined that the reliability is equal to or less than the threshold value in Step S353 when the log related to the second action recognition is processed, and the processing proceeds to Step S355. It is determined that the state in which the reliability is determined to be equal to or less than the threshold value has not continued in Step S355, and the processing proceeds to Step S357. Then, display with an alert is performed in Step S357.

It is determined that the reliability is equal to or less than the threshold value in Step S353 when the log related to the third action recognition is processed, and the processing proceeds to Step S355. It is determined that the state in which the reliability is determined to be equal to or less than the threshold value has continued in Step S355, and the processing proceeds to Step S356.

In Step S356, display with an alert in accordance with the number of times the state has continued is performed. Since the number of times the state has continued is two in this case, display with an alert in accordance with two times, for example, display with an alert in which the result of the third recognition is displayed with a thicker color than that for the result of the second recognition is performed as illustrated in B of FIG. 29. Alternatively, display with an alert in which the result of the second recognition and the result of the third recognition are displayed with a color used when the number of times the state has continued is two is performed as illustrated in B of FIG. 30, for example.

It is determined that the reliability is equal to or less than the threshold value in Step S353 when the log related to the fourth action recognition is processed, and the processing proceeds to Step S355. It is determined that the state in which the reliability is determined to be equal to or less than the threshold value has continued in Step S355, and the processing proceeds to Step S356.

In Step S356, the display with an alert in accordance with the number of times the state has continued is performed. Since the number of times the state has continued is three in this case, display with an alert in accordance with three times, for example, display with an alert in which the result of the fourth recognition is displayed with a thicker color than that for the result of the third recognition is performed as illustrated in B of FIG. 29. Alternatively, display with an alert in which the results of the second, third, and fourth recognition is performed with a color used when the number of times the state has continued is three as illustrated in B of FIG. 30, for example.

When the log related to the fifth action recognition is processed, it is determined that the reliability is not equal to or less than the threshold value in Step S353, and the processing proceeds to Step S354. Since normal display is performed in Step S354, display with no alert, that is, "TRAIN" is displayed as illustrated in B of FIG. 29 or B of FIG. 30.

Display representing seriousness with a color (display) may be performed by displaying the period during which an abnormality occurs in the sensor 51 (terminal 12) with a changed color as described above.

In addition, the message as illustrated in FIG. 26 or 27 may be displayed. For example, the example of display performed in the message display region 321 illustrated in FIG. 26 may be applied to the example of display performed in the action display region 212 illustrated in FIG. 29, and for example, the reason such as "Due to an increase in the processing burden on the terminal" may be displayed with a result of the second recognition.

When the display illustrated in B of FIG. 29 is performed, messages may be displayed on the results of the second, third, and fourth recognition, respectively, or one message may be displayed thereon.

In addition, in a case in which the reason is displayed, a button indicating "Display a reason" may be previously displayed, and the reason may be displayed when the button is operated in the same manner as in the case described above with reference to FIG. 26.

In addition, the example of display performed in the message display region 321 illustrated in FIG. 27 may be applied to the example of display performed in the action display region 212 illustrated in FIG. 29, for example, and a countermeasure such as "Do you want to diagnose the sensor data?" may be displayed with the result of the second recognition, for example.

When the display in B of FIG. 29 is performed, the messages may be displayed on the results of the second, third, and fourth recognition, respectively, or one message may be displayed thereon. In particular, since there is a possibility that an abnormality occurs in the sensor 51 for a relatively long period of time when the display illustrated in B of FIG. 29 is performed, a message such as "Do you want to diagnose the sensor data?" may be displayed.

That is, different messages may be displayed in accordance with the period during which the abnormality has occurred (the number of times the reliability has been equal to or less than the threshold value), and for example, the message representing the reason as illustrated in FIG. 26 may be displayed when it is determined that an abnormality has occurred only in one section or a relatively short period of time as illustrated in A of FIG. 29, or the message representing the countermeasure as illustrated in FIG. 27 may be displayed when it is determined that an abnormality has occurred for a relatively long period of time.

According to the present technology, it is possible to notify the user that an abnormality has occurred in the sensor 51 (terminal 12) when such a situation has occurred (precision has been degraded) as described above.

Note that low reliability of the sensor 51 is represented by adding a question mark to the result of the recognition, displaying the result of the recognition with a pale color, or the like as illustrated in FIG. 30, for example, when the reliability of the sensor 51 is low as in the aforementioned embodiment. In this case, a state in which there is a possibility that the result of the recognition is not accurate since the reliability of the sensor 51 is low although a walking action (WALK) is recognized as a user's action as represented by "WALK?", for example, is represented.

That is, the example in which some result of recognition is extracted by the recognition unit 53 even in a case in which precision of the sensor 51 is not sufficient for some reason and display with an alert is displayed for the result of the recognition has been described in the aforementioned embodiment.

Although some result of recognition may be extracted by the recognition unit 53 in a case in which the precision of the sensor 51 is not sufficient for some reason, display such as "INVALID" may be performed when such a result of recognition is displayed. In other words, although display with an alert as described above may be performed, words or wording other than words representing an action, for example, words or wording such as "INVALID" or "Not determined due to degradation of precision", for example, may be displayed. It is a matter of course that such words or wording may be displayed along with the aforementioned display with an alert.

In the aforementioned embodiment, a mechanism with which the user can correct the action recognition with alert display may be provided. In a case in which a result of recognition displayed with a question mark is operated, for example, a mechanism of shifting the screen to a screen on which the result of the recognition can be corrected such that the result of the recognition is corrected may be provided.

### <Determination of reliability for each application>

According to the present technology, it is possible to notify the user that an abnormality has occurred (precision has been degraded) in the sensor 51 (terminal 12) when such a situation has occurred as described above. Whether or not an abnormality has occurred in the sensor 51 depends on precision required for a predetermined application.

Precision required for the sensor 51 when a predetermined application (the application A in the aforementioned example) performs processing is different from precision required for the sensor 51 when another application (assumed to be an application B) that is different from the predetermined application performs processing.

In the terminal 12, a plurality of applications that perform processing using the sensor 51 may be operating at the same time. In other words, there is a possibility that data from the sensor 51 is used by the plurality of applications rather than only one application.

There is also a case in which precision necessary for the sensor 51 is maintained for the application A while precision necessary for the sensor 51 is not maintained for the application B when the application A and the application B that perform processing using an output from the sensor 51 operate at the same time.

That is, allowable precision differs for each application. In addition, an application that executes processing by changing a determination algorithm depending on the precision of the sensor 51 is also considered as the predetermined application, and in such an application, there is a possibility that it is not determined that an abnormality has occurred in the sensor 51 since it is possible to perform the processing itself even if the precision of the sensor 51 is degraded.

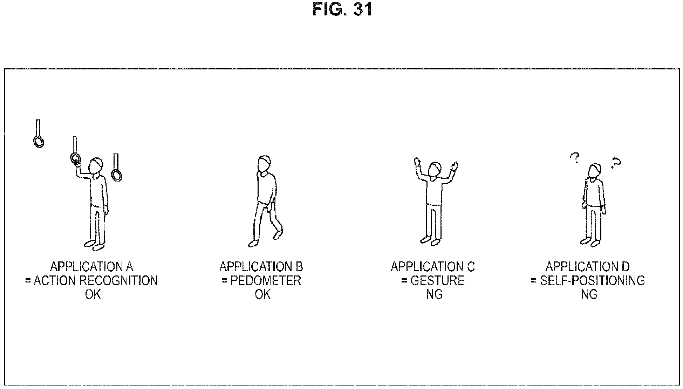

Specifically, there is a possibility that it is determined that the precision of the sensor 51 is sufficient (OK) for an application A (= an application of performing action recognition), the precision is sufficient (OK) for an application B (= an application as a pedometer), the precision is insufficient (NG) for an application C (= an application of recognizing gestures), and the precision is insufficient (NG) for an application D (= an application of performing self-positioning) as illustrated in FIG. 31 at a predetermined time, for example.

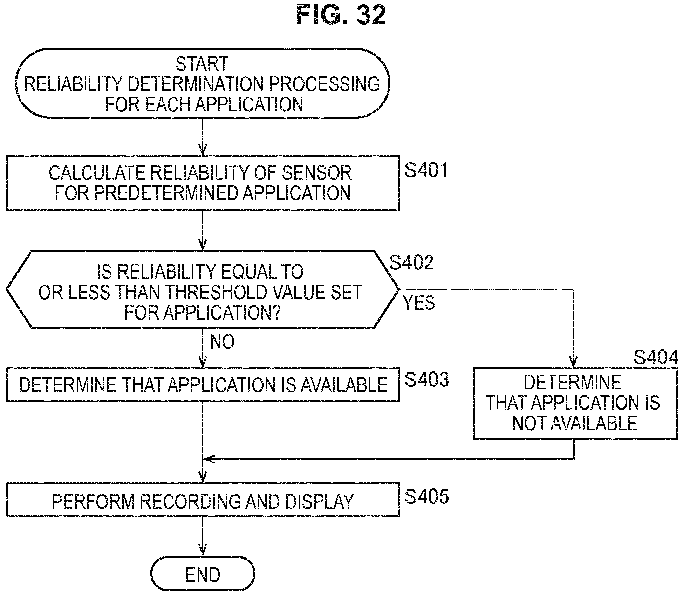

In this manner, it is possible to calculate the reliability of the sensor 51 for each application and to present reliability for each application to the user. The processing of performing such presentation will be described with reference to the flowchart illustrated in FIG. 32.

In Step S401, reliability of the sensor 51 for a predetermined application is calculated. The calculation of the reliability can be performed in a manner similar to that in the aforementioned case. In addition, reliability may be calculated by targeting only the sensor that is used by the application that serves as a target of processing, from among a plurality of sensors included in the sensor 51.

In Step S402, it is determined whether or not the reliability is equal to or less than a threshold value set for the application. In a case in which setting has been made such that the sampling frequency is preferably equal to or greater than A and the measurement range is preferably equal to or greater than B, for example, the values may be used as the threshold value set for the application.

In a case in which it is determined that the reliability is not equal to or less than the threshold value set for the application in Step S402, the processing proceeds to Step S403, and it is determined that the use thereof is possible. Meanwhile, in a case in which it is determined that the reliability is equal to or less than the threshold value set for the application in Step S402, the processing proceeds to Step S404, and it is determined that the use thereof is not possible.

Such a result of determination is displayed or stored. That is, the result of the determination is stored in the storage unit 55 and is displayed on the display unit 57 as needed in Step S405.

By storing the result in the storage unit 55, it is possible to present whether or not the predetermined application has been in an available state to the user depending on the precision of the sensor 51 when an instruction for reading the log is provided as described above.

Note that although the example case in which two results of determination, namely available and not available, are output has been described herein, two or more results of determination may be output. For example, four results of determination, such as "comfortably operating", "operating", "operating with a difficulty", "not operating", may be output.

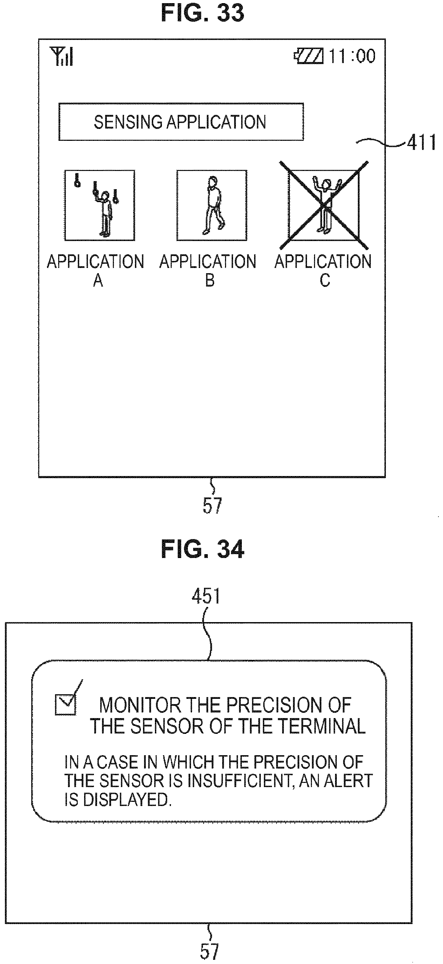

Display of a result of determining usage for each application displayed on the display unit 57 will be described with reference to FIG. 33. Referring to FIG. 33, an application list display region 411 for displaying applications is provided in the display unit 57.

In the application list display region 411, applications in a category are displayed from among applications classified into each category. In the example illustrated in FIG. 33, applications that belong to sensing applications that perform processing using data from the sensor 51 are displayed. Displaying the applications is assumed to be displaying names of the applications, icons representing the applications, and the like.

In the example illustrated in FIG. 33, the respective names and icons (pictures) of the application A, the application B, and the application C that belong to the sensing applications are displayed. Note that the applications that are not displayed are configured to be displayed in response to an operation such as sliding.

In the display example illustrated in FIG. 33, an X mark is displayed in a superimposed manner on an icon representing the application C. The X mark is not superimposed on the icons that represent the application A and the application B, respectively.

In a case in which such display is performed, the application A and the application B are in a state in which precision of the sensor 51 can be sufficiently obtained and are determined to be available, and the application C is in a state in which the precision of the sensor 51 cannot be sufficiently obtained and is determined to be not available.

In this manner, in a case in which a plurality of applications that perform processing using the sensor 51 are displayed in a list, the precision of the sensor 51 is not sufficient at that point, and there is an application that cannot precisely perform processing, display representing that, for example, an X mark is displayed in a superimposed manner.

Performing such display enables the user to distinguish available applications and unavailable applications from among the applications displayed in the list at a glance. Therefore, it is possible to improve usability.

Such display may be performed when the user provides an instruction or may be constantly displayed in a predetermined region in the display unit 57.

For example, the processing in the flowchart illustrated in FIG. 32 is executed when the user provides an instruction for display (display a list of applications) as illustrated in FIG. 33, precision of the sensor 51 is measured at that point, available or unavailable applications are determined for the respective applications, and the applications are displayed along with the results of the determination.

In addition, the processing in the flowchart illustrated in FIG. 32 may be executed at predetermined cycle, precision of the sensor 51 may be measured at the point of the execution, available or unavailable applications may be determined for the respective applications, and a displayed list of applications may be updated on the basis of the results of the determination such that the list is continuously presented to the user, for example.

In addition, the processing in the flowchart illustrated in FIG. 32 may be executed at a predetermined cycle, precision of the sensor 51 at the point of the execution may be stored as a log in the storage unit 55, the stored log may be referred to when the user provides an instruction for display (a display of a list of applications) as illustrated in FIG. 33, and the list of applications may be displayed. In such a case, the list of applications may be displayed by referring to the latest log.

In addition, in a case in which precision (reliability) of the sensor 51 remains as a log, learning using the log may be performed. For example, the log may be referred to for every application, an average of the reliability of the sensor 51 may be calculated, and in a case in which the average value becomes equal to or less than a predetermined threshold value, the application may be determined to be not available, and display indicating that the application is not available may be performed.

In addition, the number of times the precision of the sensor 51 has been determined to be low may be left as a log, the number of times the precision of the sensor 51 has been determined to be low may be calculated for each application by referring to the log, and in a case in which the number of times the precision has been determined to be low exceeds a predetermined number of times, it may be determined that the application is not available, and display indicating that the application is not available may be performed.

### <Setting of threshold value of reliability>

According to the present technology, it is possible to present the fact that the precision (reliability) of the sensor 51 (terminal 12) has been degraded to the user in a case in which such a situation has occurred as described above. Whether to present it (whether or not to display an alert or whether or not to perform display with an alert) is determined by determining whether or not the reliability has become equal to or less than a predetermined threshold value.

Since there is a possibility that the threshold value differs for each application as described above with reference to FIGS. 31 to 33, the threshold value may be set for each application. Alternatively, the processing can also be performed by using one threshold value.

Further, the threshold value may be set by the user. In a case in which the threshold value is set to be high, the reliability becomes equal to or less than the threshold value in many cases, and there is a possibility that the number of times an alert is displayed increases. Therefore, it becomes possible for the user to set the number of times (possibility) the alert is displayed by the user by allowing the user to set the threshold value.

FIG. 34 is an example of a screen displayed on the display unit 57 when the user sets the threshold value. A threshold value setting screen 451 is displayed on the display unit 57. In the threshold value setting screen 451, a check box is displayed, and a message such as "Monitor the precision of the sensor of the terminal" is displayed on the right side of the check box. In addition, a message such as "In a case in which the precision of the sensor is insufficient, an alert is displayed." is also displayed below the message.

A state in which the precision of the sensor 51 of the terminal 12 is monitored is achieved by the user referring to such a threshold value setting screen 451 and checking the check box, and when the precision of the sensor 51 is not sufficient, the user can recognize that an alert for allowing the user to recognize it is displayed.

In a case in which the user refers to such a threshold value setting screen 451 and checks the check box, the aforementioned reliability, for example, is calculated. In a case in which the reliability is equal to or less than a threshold value, an alert is displayed on the display unit 57.

In addition, in a case in which the user refers to such a threshold value setting screen 451 and does not check the check box, the aforementioned processing of calculating the reliability, and in a case in which the reliability is equal to or less than the threshold value, displaying the alert on the display unit 57, for example, is not executed, and the alert is not displayed. Alternatively, the threshold value when the alert is displayed may be set to a low threshold value, and the alert may be displayed only when the precision of the sensor 51 is degraded up to a level at which the application cannot operate, for example.

Display with an alert may be performed when a log stored in the storage unit 55 is read and displayed even in a case in which the setting is made such that the alert is not displayed.

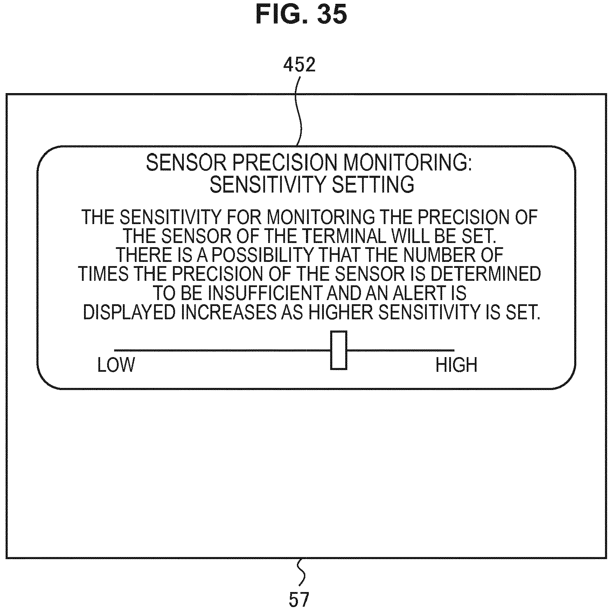

FIG. 35 illustrates another example of the screen displayed on the display unit 57 when the user sets the threshold value. A threshold value setting screen 452 is displayed on the display unit 57. A message such as "Sensor precision monitoring: sensitivity setting" is displayed in the threshold value setting screen 452. In addition, a message such as "The sensitivity for monitoring the precision of the sensor of the terminal will be set. There is a possibility that the number of times the precision of the sensor is determined to be insufficient and an alert is displayed increases as higher sensitivity is set." is displayed below the message.

Further, a slide bar is displayed below these messages, "Low" is displayed on the left side, and "High" is displayed on the right side. The user can recognize that it is possible to set the sensitivity for monitoring the precision of the sensor by operating the slide bar with reference to such a threshold value setting screen 452. Since it is possible to set the threshold value in a stepwise manner by using such a threshold value setting screen 452, it is possible for the user to set a more desired threshold value.

In a case in which the user sets the threshold value with reference to such a threshold value setting screen 452, the aforementioned reliability, for example, is calculated. In a case in which the reliability is equal to or less than the threshold value set by the user, an alert is displayed on the display unit 57. In a case in which the user sets a high threshold value, the possibility that the reliability is equal to or less than the threshold value increases, and there is a possibility that the number of times the alert is displayed increases. In addition, in a case in which the user sets a low threshold value, the possibility that the reliability is equal to or less than the threshold value decreases, and there is a possibility that the number of times the alert is displayed decreases.

The threshold value may be set by the user in this manner. By allowing the user to set the threshold value, it is possible to adjust an alert display frequency by adjusting the threshold value in a case in which the user feels that the display of the alert is annoying, for example. Therefore, it is possible to improve usability.

### <First precision measurement processing of sensor>

According to the present technology, it is possible to measure the precision (calculate the reliability) of the sensor 51 (terminal 12) as described above. By using this, it is possible to determine whether or not the sensor 51 has precision necessary for an application A to operate comfortably and to recommend a predetermined application to the user on the basis of the result of the determination when the user purchases the application A from the store server 11, for example.

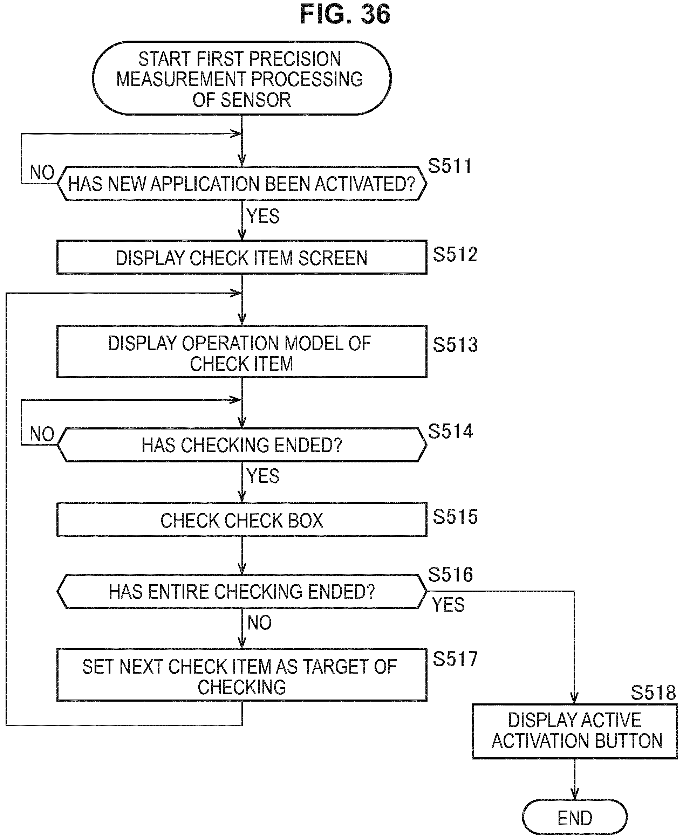

A case in which the precision of the sensor 51 is measured and a result of the measurement is presented to the user when the user purchases (activates) the application will be described with reference to the flowchart illustrated in FIG. 36.

In Step S511, the terminal 12 determines whether or not a new application has been activated. Such determination may be made when an application downloaded and stored in the terminal 12 is activated for the first time or when a new application is downloaded.

The processing in Step S511 is repeated until it is determined that the new application has been activated in Step S511. Meanwhile, in a case in which it is determined that the new application has been activated in Step S511, the processing proceeds to Step S512. A check item screen is displayed on the display unit 57 in Step S512.

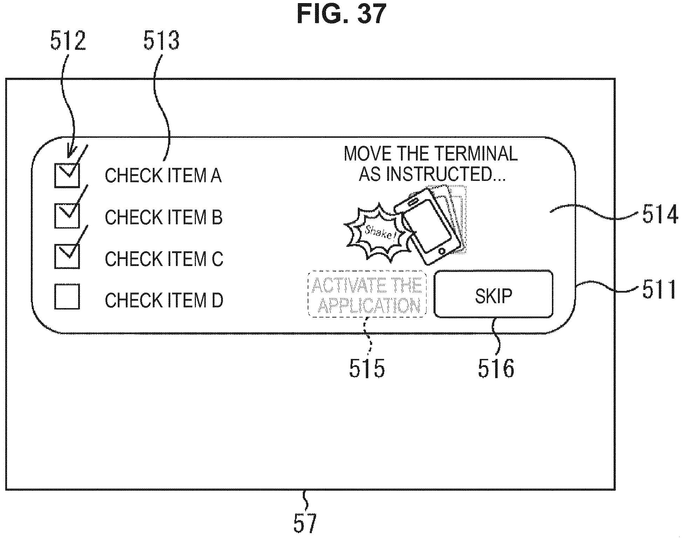

Here, an example of the check item screen displayed on the display unit 57 in Step S512 is shown in FIG. 37. A check box display region 512, a check item display region 513, an operation model display region 514, a button 515, and a button 516 are displayed on the check item screen 511.

A plurality of check items are displayed in the check item display region 513, and a check box is provided for each item in the check box display region 512. In addition, a check box for an item that has already been checked is checked. In the example illustrated in FIG. 37, four items, namely, "Check item A", "Check item B", "Check item C", and "Check item D" are displayed in the check item display region 513.

In addition, check boxes are displayed for the respective items, and four check boxes are displayed in the check box display unit 512. In addition, since checking of three items from the check items A to C has ended, the check boxes corresponding to these items are displayed in a checked state in FIG. 37.

Note that the respective check items A to D correspond to items (precision measured when the reliability is calculated) that are to be checked as an abnormality in the sensor 51 as described above with reference to FIG. 3, for example. For example, the check item A can be an item for determining whether or not jitter of a timestamp is within an allowable range, the check item B can be an item for determining whether or not calibration of a geomagnetic sensor is sufficient, the check item C can be an item for determining whether or not there is no offset variation, and the check item D can be an item for determining whether or not the measurement range is sufficient.

In the operation model display region 514, operations that correspond to the check items and that are to be performed by the user are displayed as texts or pictures. In the example illustrated in FIG. 37, an operation for checking the unchecked "Check item D" is displayed in the operation model display region 514. A message such as "Move the terminal as instructed" and a picture indicating an operation of shaking the terminal 12 are displayed in the operation model display region 514.

Wording such as "Activate the application" is displayed on the button 515. This button 515 is a button that is brought into an active state when all the check items are checked and is brought into a non-active state in a case in which there are unchecked items. If this button is operated after being brought into the active state, then the application is activated.

Wording such as "Skip" is displayed on the button 516. This button 516 is a button that is operated when checking for evaluating the precision is not performed (skipped). In a case in which this button 516 is operated, the checking for evaluating precision is interrupted, and the application is activated.

Note that a message such as "Precision of the application is not secured" may be displayed in a case in which the button 516 for skipping is operated or below the button 516.

Such a check item screen 511 is displayed on the display unit 57 in Step S512. In Step S513, an operation model corresponding to an item to be checked at that time is displayed in the operation model display region 514. In a case in which "Check item D" is an item to be checked as illustrated in FIG. 37, for example, an operation model corresponding to "Check item D" is displayed in the operation model display region 514.

The user sees the model displayed in the operation model display region 514 and performs a predetermined operation, thereby checking an item. In Step S514, it is determined whether or not checking has ended. The checked states of the items to be checked are maintained until it is determined that the checking has ended in Step S514.

In a case in which it is determined that the checking has ended in Step S514, the processing proceeds to Step S515. In Step S515, check boxes corresponding to the check items for which checking is determined to have ended are checked. In a case in which it is determined that checking corresponding to "Check item D" has ended, for example, the check box displayed at a location of the check item D is checked.

In Step S516, it is determined whether or not the entire processing has ended. In a case in which there are four check items as illustrated in FIG. 37, for example, it is determined that the entire checking has ended in Step S516 if the checking of "Check item D" has ended. In addition, it is determined that the entire checking has not ended in Step S516 at the point at which the checking of "Check item C" is ended, for example.

In a case in which it is determined that the entire checking has not yet ended in Step S516, the processing proceeds to Step S517, and the processing in and after Step S513 is repeated by setting the next item as an item to be checked.

Meanwhile, in a case in which it is determined that the entire checking has ended in Step S516, the processing proceeds to Step S518. In Step S518, an active activation button is displayed. That is, the button 515 in the non-active state is brought into the active state.

If the user operates the button 515 in the active state, the application is activated. Note that a message for letting the user know that the precision of the sensor 51 is determined to be not able to secure the precision of the application when such a situation occurs at the point at which the checking ends. In addition, a configuration in which the button 515 is brought into an active state after the message is checked may be employed at this time.

In addition, the sensor 51 may be checked, and the result of the checking may then be presented to the user. For example, display that represents comfortability of operations of the applications may be performed with a message such as "Sufficient precision of the application can be expected in this terminal." or "There is a possibility that the precision of the application is low in this terminal." or a numerical value such as "Degree of comfortability in operations: 80%".

### <Second precision measurement processing of sensor>

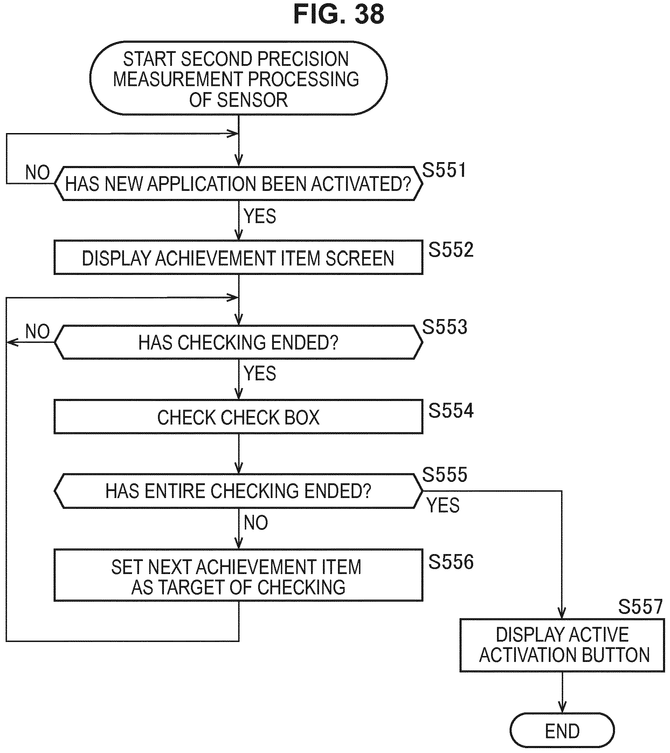

Although the checking is performed by allowing the user to perform operations necessary for measurement in the aforementioned first precision measurement processing of the sensor, a part or an entirety of the plurality of check items may be checked without requiring user's operations. A case in which the checking is performed without requiring user's operation will be described herein as second precision measurement processing of the sensor with reference to the flowchart illustrated in FIG. 38.

In Step S551, it is determined whether or not a new application has been activated. This determination processing can be performed in a similar manner to that in Step S511 in the flowchart illustrated in FIG. 36.

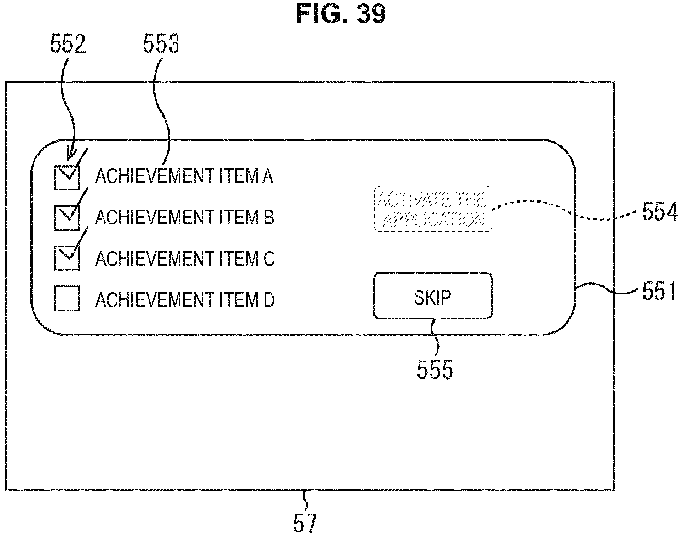

In Step S552, an achievement item screen is displayed on the display unit 57. Here, an example of the achievement item screen displayed on the display unit 57 in Step S552 is illustrated in FIG. 39. A check box display region 552, an achievement item display region 553, a button 554, and a button 555 are displayed in the achievement item screen 551.

A plurality of achievement items are displayed in the achievement item display region 553, and the check boxes are provided for the respective items in the check box display region 552. In addition, the check boxes for the items that have already been achieved are checked. In the example illustrated in FIG. 39, four items, namely, "Achievement item A", "Achievement item B", "Achievement item C", and "Achievement item D" are displayed in the achievement item display region 553.

In addition, the check boxes are displayed for the respective items, and the four check boxes are displayed in the check box display unit 552. In addition, since achievement of the three achievement items A to C has ended, the check boxes corresponding to these items are displayed in a checked state in FIG. 39.

Note that the respective achievement items A to D correspond to items to be achieved as an abnormality in the sensor 51 (precision measured when the reliability is calculated) as described above with reference to FIG. 3, for example, and are items for measuring predetermined precision in a manner similar to the check items A to D illustrated in FIG. 37.

Wording such as "Activate the application" is displayed on the button 554. This button 554 is a button that is brought into an active state when all the achievement items are achieved and is brought into a non-active stat in a case in which there is an item that has not yet been achieved. If this button is operated after being brought into the active state, the application is activated.

Wording such as "Skip" is displayed on the button 555. This button 555 is a button that is operated when achievement for evaluating the precision is not performed (skipped). In a case in which this button 555 is operated, the processing for measuring the precision is interrupted, and the application is activated.

Note that a message such as "The precision of the application is not secured" may be displayed in a case in which the button 555 for skipping is operated or below the button 555.

Such an achievement item screen 551 is displayed on the display unit 57 in Step S552, and the processing in and after Step S553 is executed. That is, it is determined whether or not checking as a target of processing has ended (whether the checking has been achieved) in Step S553. In this case, checking corresponding to the achievement items A to D are checked in order or in parallel.

In a case in which it is determined that the checking of the achievement items as targets of the processing has ended in Step S513, the processing proceeds to Step S514. The check boxes corresponding to the achievement items that are determined to have been achieved are checked in Step S514.

In Step S515, it is determined whether or not the entire processing has ended (whether all the achievement items have been achieved). In a case in which it is determined that the checking corresponding to all the achievement items has not yet ended in Step S515, the processing proceeds to Step S516, and the processing in and after Step S553 is repeated by setting the next item as a check item.

Meanwhile, in a case in which it is determined that the checking corresponding to all the achievement items has ended in Step S515, the processing proceeds to Step S517. In Step S517, an active activation button is displayed. That is, the button 554 in the non-active state is brought into the active state.

If the user operates the button 554 in the active state, the application is activated. Note that a message that let the user know that the precision of the sensor 51 is determined to be not able to secure the precision of the application may be displayed when such a situation has occurred at the point at which the checking ends. In addition, a configuration in which the button 554 is brought into the active state after the message is checked may be employed at this time.

In addition, the result of the achievement may be presented to the user after the sensor 51 is checked. For example, display that represents comfortability of operations of the applications may be performed with a message such as "Sufficient precision of the application can be expected in this terminal." or "There is a possibility that the precision of the application is low in this terminal." or a numerical value such as "Degree of comfortability in operations: 80%".

Although FIG. 39 illustrates the example in which the wording such as "Activate the application" is displayed on the button 554, a button on which a degree of achievement of the check item, for example, "80%" is displayed and the numerical value changes in accordance with the progress may be employed. Then, the display may be switched to wording such as "Activate the application" at the point at which the numerical value reaches 100%, for example, and the button may be brought into the active state.

In addition, although the case in which there is no region corresponding to the operation model display region 514, which is displayed on the check item screen 511 illustrated in FIG. 37, in the achievement item screen 551 illustrated in FIG. 39 has been described, the region corresponding to the operation model display region 514 may also be provided in the achievement item screen 551. For example, a picture or a message in accordance with a checked item may be displayed.

The first precision measurement processing of the sensor described above with reference to FIGS. 36 and 37 and the second precision measurement processing of the sensor described above with reference to FIGS. 38 and 39 may be combined. Although not illustrated in the drawing, check items may be classified into check items that require user's operations and check items that do not require user's operation, the first precision measurement processing of the sensor described above with reference to FIGS. 36 and 37 may be applied to the check items that require the user's operation, and the second precision measurement processing of the sensor described above with reference to FIGS. 38 and 39 may be applied to the check items that do not require the user's operation.

For example, since jitter in a timestamp can be measured from past data or the like with no need of special use's operations, the second precision measurement processing is applied to the measurement to perform checking. In addition, since how wide the measurement range is can be measured to check whether or not a measurement range of an acceleration sensor is sufficient by the user performing an operation of shaking the terminal, for example, the first precision measurement processing is applied thereto to perform checking.

In this manner, it is possible to determine whether or not the sensor 51 has precision that is required for an application at the point before the application is activated. In addition, making such a determination enables the user to know whether or not an application to be purchased operates with sufficient precision in the user's own terminal 12 at the point before the user purchases the application, for example, and to determine not to purchase the application when it is determined that the user's own terminal 12 does not have sufficient precision.

In a case in which the application does not operate with sufficient precision after the purchase, there is a possibility that there is a problem in the application and the user less evaluates the reliability of the application. However, it is possible to prevent such degradation of the reliability from occurring.

Such precision measurement is also executed when the message (button) such as "Do you want to diagnose the sensor data?" described above with reference to FIG. 21, for example, is presented to the user and the user operates such a button.

That is, the precision measurement processing is executed even in a case in which the precision of the processing of the application is degraded due to degradation of the precision of the sensor 51 when the application is operating, the precision (reliability) of the sensor 51 is measured by the user, and the result of the measurement is presented to the user as needed.

### <First recommendation processing of applications>

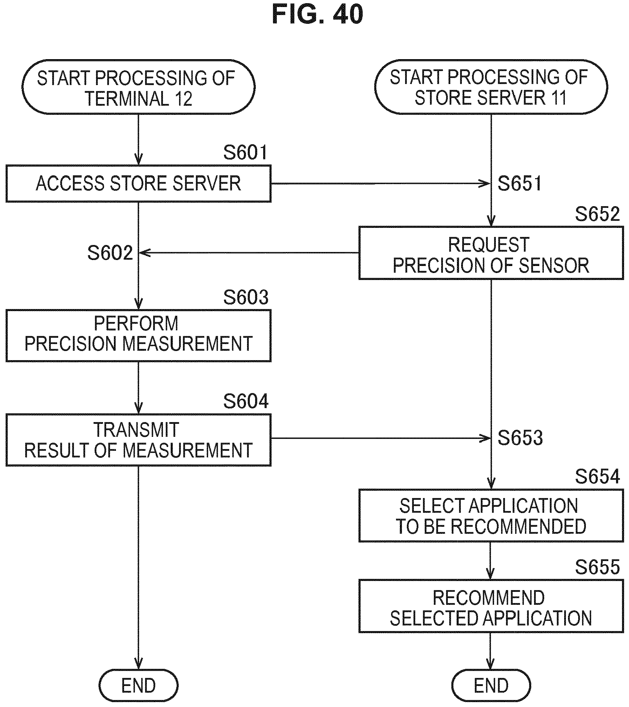

The result of such precision measurement can also be utilized on the side of the store server 11 and can be used for processing such as recommendation of applications. First recommendation processing of applications will be described with reference to the flowchart illustrated in FIG. 40.

In Step S601, the terminal 12 is connected to the store server 11 via the network 13 (FIG. 1). The store server 11 accepts an access from the terminal 12 in Step S651 and requests the terminal 12 to transmit the precision of the sensor 51 in Step S652.

In Step S602, the terminal 12 receives the request for the precision from the store server 11. In Step S603, the terminal 12 performs the precision measurement. As this precision measurement, the aforementioned first precision measurement or the second precision measurement (or measurement that combines the first precision measurement with the second precision measurement) is performed. Note that in a case in which the aforementioned precision measurement is performed on the side of the terminal 12, the result of the measurement may be stored, and processing of reading the stored result of the measurement may be executed in Step S603.

In Step S604, the result of the measurement is transmitted from the terminal 12 to the store server 11. The store server 11 receives the result of the measurement transmitted from the side of the terminal 12 in Step S653. The store server 11 selects an application to be recommended in Step S654. For example, the store server 11 has a plurality of applications that execute processing using data from the sensor as targets of sales.

Then, precision of the sensor with which the precision of the applications can be maintained is set for the respective applications, and the set precision of the sensor (referred to as set precision) and the result of the measurement transmitted from the side of the terminal 12 (referred to as the precision of the sensor or measured precision) are compared with each other. In a case in which the measured precision is equal to or greater than the set precision as a result of the comparison, the application is selected as an application to be recommended.

Such comparison is made for each application, and the application to be recommended to the user is selected. Then, the selected application is presented to the user in Step S655. That is, the application that is considered to comfortably operate on the user's terminal 12 is recommended to the user.

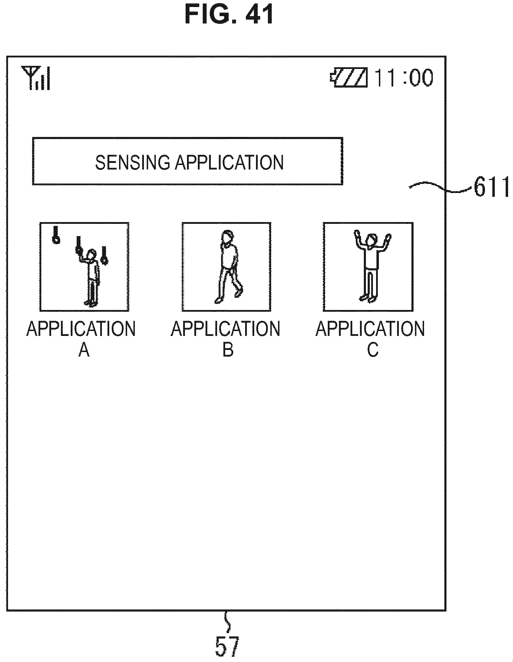

FIG. 41 illustrates an example of a screen of recommended applications displayed on the display unit 57 of the terminal 12. The display example illustrated in FIG. 41 illustrates an example screen, which is displayed on the display unit 57 of the terminal 12 on the basis of data provided from the side of the store server 11, on which a plurality of applications are displayed in the application list display region 611.

In the application list display region 611, pictures and names representing the applications selected to be recommended on the side of the store server 11 are displayed. The user can select and purchase a desired application from among the applications displayed in the application list display region 611.

Since the applications displayed in the application list display region 611 are applications that are determined to have sufficient precision secured with the precision of the sensor 51 of the terminal 12, the user can purchase any of the applications in relief.

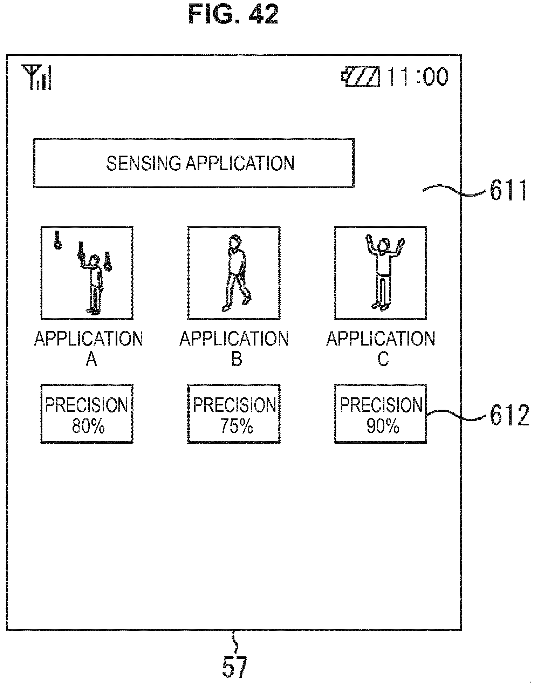

FIG. 42 illustrates another example of the screen of the recommended applications displayed on the display unit 57 of the terminal 12. The display example illustrated in FIG. 42 illustrates an example in which a precision display region 612 for displaying numerical values that represent precision of the sensor 51 when the applications are executed is added to the display example illustrated in FIG. 41. In the display example illustrated in FIG. 42, the plurality of applications are displayed in the application list display region 611, and precision with respect to the respective applications are displayed in the precision display region 612.

Pictures and names representing the applications selected to be recommended on the side of the store server 11 are displayed in the application list display region 611, and how high precision these applications have when operating on the terminal 12 is displayed in the precision display region 612. The user can select and purchase a desired application from among the applications displayed in the application list display region 611 and can make a selection with reference to the precision at the time of the selection.

Since the applications displayed in the application list display region 611 are applications that are determined to have sufficient precision secured with the precision of the sensor 51 of the terminal 12 and how high the precision will be is also displayed, the user can purchase any of the applications in relief.

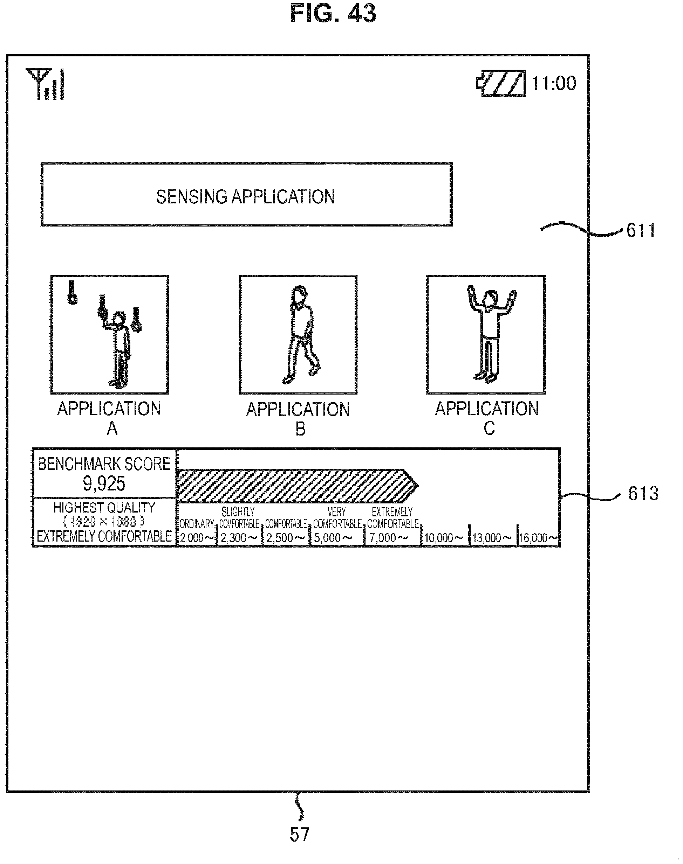

FIG. 43 illustrates another example of the screen of the recommended applications displayed on the display unit 57 of the terminal 12. The display example illustrated in FIG. 43 illustrates an example in which a benchmark display region 613 for displaying the precision of the terminal 12 as benchmarks is added to the display example illustrated in FIG. 41. In the display example illustrated in FIG. 43, a plurality of applications are displayed in the application list display region 611, and the benchmarks of the terminal 12 are displayed in the benchmark display region 613.

Pictures and names representing the applications selected to be recommended on the side of the store server 11 are displayed in the application list display region 611. The results of the precision measurement executed by the terminal 12 are displayed in the benchmark display region 613. The results of the precision measurement are represented as benchmark scores by numerical values, and further, the numerical values are represented by lengths of lines in FIG. 43. In addition, a gauge that enables the user to recognize whether or not the applications comfortably operate at a glance in accordance with the position at which leading ends of lines are positioned is also displayed.

The benchmarks displayed in the benchmark display region 613 may be displayed as benchmarks that commonly correspond to the plurality of applications or may be displayed as benchmarks for the respective applications. In a case in which the benchmarks are displayed for the respective applications, a benchmark corresponding to a selected application may be displayed from among the applications displayed in the application list display region 611. In other words, if the selected application is changed, then the numerical value and the length of the line displayed in the benchmark display region 613 are changed, or the display of the gauge is changed without changing the numerical value and the length of the line.

The user can select and purchase a desired application from among the applications displayed in the application list display region 611 and can make a selection with reference to the benchmarks at the time of the selection.

Since the applications displayed in the application list display region 611 are applications that are determined to have sufficient precision secured with the precision of the sensor 51 of the terminal 12 and how high the precision will be can also be determined with reference to the benchmarks, the user can purchase any of the applications in relief.

### <Second recommendation processing of applications>

Next, second recommendation processing of applications will be described. In the second recommendation processing, a database is provided in the store server 11, and recommended applications are selected with reference to the database.

Data for discriminating terminals provided with a sensor with high precision is accumulated in the database. When the aforementioned precision measurement is performed on the side of the terminal 12, for example, the result of the measurement may be supplied from the side of the terminal 12 to the side of the store server 11, and the precision of the sensor 51 of the terminal 12 may be collected for each terminal by accumulating the supplied result of measurement.

In addition, a mechanism by which the number of times it is determined that an abnormality has occurred in the sensor 51, the result of the aforementioned precision measurement, and the like are periodically collected by the store server 11 when the application is used on the side of the terminal 12 may be provided such that the precision of the sensor 51 of the terminal 12 is collected for each terminal (for each type of terminal).

In addition, the precision of the sensor 51 of the terminal 12 may be measured for each terminal 12 and may be accumulated in the database in advance on a creation side of the application.

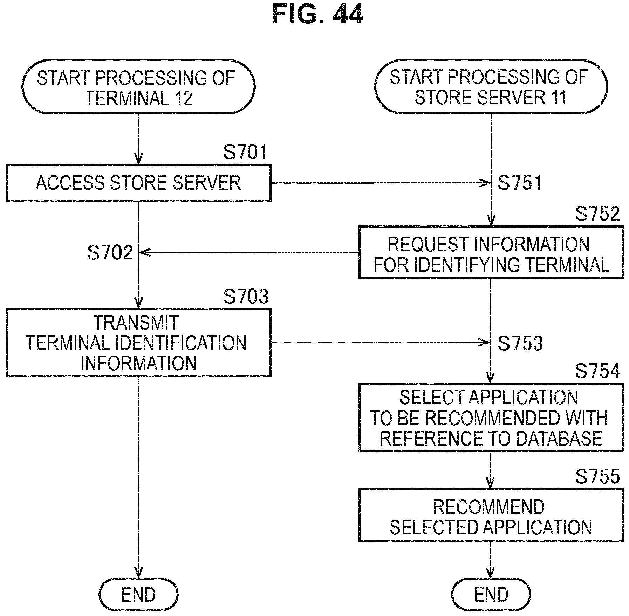

The database in which the precision of the sensor 51 of the terminal 12 is accumulated in this manner may be used to recommend the applications. Second recommendation processing of applications will be described with reference to the flowchart illustrated in FIG. 44.

In Step S701, the terminal 12 is connected to the store server 11 via the network 13 (FIG. 1). The store server 11 accepts an access from the terminal 12 in Step S751 and requests the terminal 12 to transit information for identifying the terminal 12 (terminal identification information) in Step S752.

The terminal identification information may be information for individually identifying the terminal 12 or may be information with which it is possible to determine whether or not the terminal 12 has a possibility that it has the sensors 51 with the same precision, such as model names (versions) of the terminals 12.

In Step S702, the terminal 12 receives the request for transmitting the terminal identification information from the store server 11. In Step S703, the terminal 12 reads the terminal identification information and transmits the terminal identification information to the side of the store server 11.

The store server 11 receives the terminal identification information transmitted from the side of the terminal 12 in Step S753. The store server 11 selects applications to be recommended with reference to the database in Step 754. The data for discriminating the terminals provided with the sensors with high precision is accumulated in the database as described above.

The store server 11 refers to the database and the terminal identification information and discriminates whether or not the terminal 12, which has transmitted the terminal identification information, is a terminal provided with a sensor with high precision. In a case in which it is discriminated that the terminal 12, which has transmitted the terminal identification information, is a terminal provided with a sensor with high precision, an application that will comfortably operate on the terminal provided with the sensor with high precision is selected. Meanwhile, in a case in which it is discriminated that the terminal 12, which has transmitted the terminal identification information, is not a terminal provided with the sensor with high precision, an application that will still operate even with the sensor precision is selected.

In Step S755, selected applications are recommended. This recommendation is performed by displaying the screen illustrated in FIG. 41, 42, or 43 on the display unit 57 of the terminal 12 in the same manner as in the case described above in Step S655 in the flowchart illustrated in FIG. 40.

In this manner, the applications may be selected and recommended with reference to the database in accordance with the precision of the terminal 12 (sensor 51).

The user can still select and purchase a desired application from among the applications displayed in the application list display region 611 in this case.

According to the present technology, it is possible to measure the precision (calculate the reliability) of the sensor 51 as described above. In addition, in a case in which degradation of the precision of the sensor 51 affects a processing result offered by the application using an output from the sensor 51, it is possible to allow the user to recognize it.

In addition, it is also possible to allow the user to recognize that the malfunction (insufficient precision) is derived from the sensor 51 rather than the application by allowing the user to recognize it. In addition, it is possible to prevent the reliability of the application from being degraded by allowing the user to recognize it.

### <Hardware configuration example>

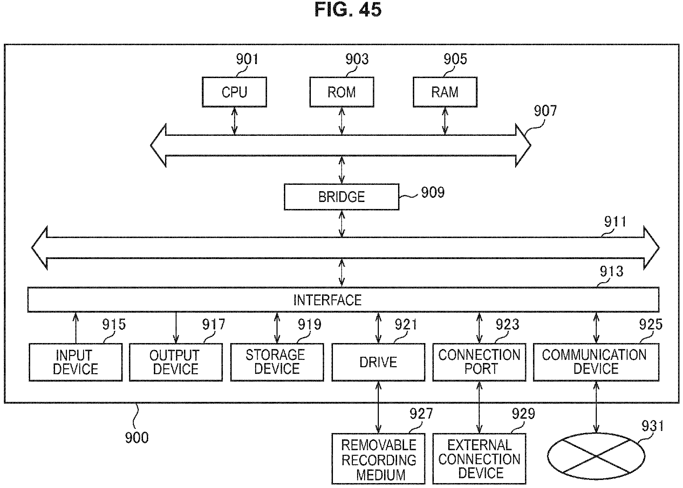

With reference to FIG. 45, a hardware configuration of the information processing apparatus 900 that may achieve the store server 11 and the terminal 12 according to the above-described embodiment of the present disclosure will be described.

FIG. 45 is a block diagram illustrating the hardware configuration of the information processing apparatus 900.

The information processing apparatus 900 includes a CPU 901, a ROM 903, and a RAM 905. In addition, the information processing apparatus 900 may include a host bus 907, a bridge 909, an external bus 911, an interface 913, an input device 915, an output device 917, a storage device 919, a drive 921, a connection port 923, and a communication device 925.

The CPU 901 functions as an arithmetic processing device and a control device, and controls the overall operation or a part of the operation of the information processing apparatus 900 according to various programs recorded in the ROM 903, the RAM 905, the storage device 919, or a removable recording medium 927. The ROM 903 stores programs, operation parameters, and the like used by the CPU 901. The RAM 905 primarily stores programs used when the CPU 901 is executed, and parameters that change as appropriate when executing such programs. The CPU 901, the ROM 903, and the RAM 905 are connected to each other via the host bus 907 including an internal bus such as a CPU bus. In addition, the host bus 907 is connected to the external bus 911 such as a Peripheral Component Interconnect/Interface (PCI) bus via the bridge 909.

The input device 915 is a device operated by a user such as a mouse, a keyboard, a touchscreen, a button, a switch, and a lever. The input device 915 may be a remote control device that uses, for example, infrared radiation and another type of radio waves. Alternatively, the input device 915 may be an external connection device 929 such as a mobile phone that corresponds to an operation of the information processing apparatus 900. The input device 915 includes an input control circuit that generates input signals on the basis of information which is input by a user to output the generated input signals to the CPU 901. A user inputs various types of data and indicates a processing operation to the information processing apparatus 900 by operating the input device 915.

The output device 917 includes a device that can visually or audibly report acquired information to a user. The output device 917 may be, for example, a display device such as a liquid crystal display (LCD), a plasma display panel (PDP), or an organic electro-luminescence (EL) display, an audio output device such as a speaker or a headphone, or a printer. The output device 917 outputs a result obtained through a process performed by the information processing apparatus 900, in the form of text or video such as an image, or sounds such as voice and audio sounds.

The storage device 919 is a device for data storage that is an example of the storage unit of the information processing apparatus 900. The storage device 919 includes, for example, a magnetic storage unit device such as a hard disk drive (HDD), a semiconductor storage device, an optical storage device, or a magneto-optical storage device. The storage device 919 stores therein various data and programs executed by the CPU 901, and various data acquired from an outside.

The drive 921 is a reader/writer for the removable recording medium 927 such as a magnetic disk, an optical disc, a magneto-optical disk, and a semiconductor memory, and built in or externally attached to the information processing apparatus 900. The drive 921 reads out information recorded on the mounted removable recording medium 927, and outputs the information to the RAM 905. In addition, the drive 921 writes the record into the mounted removable recording medium 927.

The connection port 923 is a port used to directly connect equipment to the information processing apparatus 900. The connection port 923 may be a USB (Universal Serial Bus) port, an IEEE1394 port, and a Small Computer System Interface (SCSI) port, or the like. In addition, the connection port 923 may be an RS-232C port, an optical audio terminal, an HDMI (registered trademark) (High-Definition Multimedia Interface) port, and so on. The connection of the external connection device 929 to the connection port 923 makes it possible to exchange various kinds of data between the information processing apparatus 900 and the external connection device 929.

The communication device 925 is a communication interface including, for example, a communication device for connection to the communication network 931. The communication device 925 may be, for example, a wired or wireless local area network (LAN), Bluetooth (registered trademark), or a communication card for a wireless USB (WUSB). The communication device 925 may also be, for example, a router for optical communication, a router for asymmetric digital subscriber line (ADSL), or a modem for various types of communication. For example, the communication device 925 transmits and receives signals in the Internet or transmits signals to and receives signals from another communication device by using a predetermined protocol such as TCP/IP. The communication network 931 to which the communication device 925 connects is a network established through wired or wireless connection. The communication network 931 is, for example, the Internet, a home LAN, infrared communication, radio communication, or satellite communication.

The foregoing thus illustrates an exemplary hardware configuration of the information processing apparatus 100. Each of the above components may be realized with general-purpose members or hardware specialized in the function of each component. Such a configuration may also be modified as appropriate in accordance with the technological level at the time of the implementation.

It should be noted that the program executed by the computer may be a program that is processed in time series according to the sequence described in this specification or a program that is processed in parallel or at necessary timing such as upon calling.

Also, in this specification, the term "system" represents the totality of an apparatus composed of a plurality of apparatus.

Note that the effects described in the present specification are not limiting but are merely examples, and there may be additional effects.

Note that an embodiment of the disclosure is not limited to the embodiments described above, and various changes and modifications may be made without departing from the scope of the disclosure.

Additionally, the present technology may also be configured as below.
(1) An information processing apparatus including:
   a sensor;
   a processing unit that performs processing using data from the sensor;
   a determination unit that determines whether or not precision of the sensor has been degraded; and
   a notification unit that notifies a user that the precision of the sensor has been degraded in a case in which it is determined that the precision of the sensor has been degraded.
(2) The information processing apparatus according to (1),
   in which the processing unit executes processing based on a predetermined application.
(3) The information processing apparatus according to (2),
   in which the application is an application that performs action recognition of the user, and
   the determination unit determines whether or not precision of a result of the action recognition based on the application has been degraded due to the precision of the sensor.
(4) The information processing apparatus according to any of (1) to (3),
   in which the notification unit displays a message for allowing the user to recognize that the precision of the sensor has been degraded.
(5) The information processing apparatus according to any of (1) to (4),
   in which the notification unit displays a message for allowing the user to recognize a reason for which the precision of the sensor has been degraded.
(6) The information processing apparatus according to any of (1) to (5),
   in which the notification unit displays a message for allowing the user to recognize a countermeasure against degradation of the precision of the sensor.
(7) The information processing apparatus according to any of (1) to (7),
   in which the determination unit calculates reliability of the sensor.
(8) The information processing apparatus according to (7),
   in which the reliability is presented to the user in a form of a numerical value, an indicator, or a graph indicating a change in the reliability with elapse of time.
(9) The information processing apparatus according to any of (1) to (3),
   in which the notification unit provides a notification that the precision of the sensor has been degraded along with a processing result offered by the processing unit.
(10) The information processing apparatus according to (1),
   in which the notification unit performs display for allowing the user to recognize that there is a possibility that precision of a processing result which is likely to have low precision is low, the processing result being offered by the processing unit.
(11) The information processing apparatus according to (10),
   in which the notification unit displays a processing result that is likely to have low precision by adding a question mark to the processing result, displays the processing result in a paler color than a color for another processing result, or displays the processing result in a different color from the color for the other processing result, the processing result being offered by the processing unit.
(12) The information processing apparatus according to (10) or (11),
   in which the notification unit displays a message for allowing the user to recognize a reason for which the precision of the sensor has been degraded along with the processing result that is likely to have low precision.
(13) The information processing apparatus according to any of (10) to (12),
   in which the notification unit displays a message for allowing the user to recognize a countermeasure against degradation of the precision of the sensor along with the processing result that is likely to have low precision.
(14) The information processing apparatus according to any of (10) to (13),
   in which the notification unit displays a picture for allowing the user to recognize that the precision of the sensor has been degraded along with the processing result that is likely to have low precision.
(15) The information processing apparatus according to any of (10) to (14),
   in which, in a case in which the processing result that is likely to have low precision continues, the notification unit displays the processing result that continues by gradually changing a color.
(16) The information processing apparatus according to (2),
   in which a determination is performed by the determination unit for each application.
(17) The information processing apparatus according to (16),
   in which a result of the determination performed by the determination unit for each application is presented to the user.
(18) An information processing method for an information processing apparatus including a sensor, the information processing method including the steps of:
   performing processing using data from the sensor;
   determining whether or not precision of the sensor has been degraded; and
   notifying a user that the precision of the sensor has been degraded in a case in which it is determined that the precision of the sensor has been degraded.
(19) A program for causing a computer to execute processing, the computer controlling an information processing apparatus including a sensor, the processing including the steps of:
   performing processing using data from the sensor;
   determining whether or not precision of the sensor has been degraded; and
   notifying a user that the precision of the sensor has been degraded in a case in which it is determined that the precision of the sensor has been degraded.

### Reference Signs List

- 11: store server
- 12: terminal
- 51: sensor
- 52: checker
- 53: recognition unit
- 54: determination unit
- 55: storage unit
- 56: display control unit
- 57: display unit

## Claims

1. An information processing apparatus comprising:
a sensor (51);
a processing unit configured to perform processing using data from the sensor (51);
a determination unit (54) configured to determine whether or not precision of the sensor (51) has been degraded; and
a notification unit (56) configured to notify a user that the precision of the sensor (51) has been degraded in a case in which it is determined that the precision of the sensor (51) has been degraded,
wherein the notification unit (56) is further configured to perform display for allowing the user to recognize that there is a possibility that precision of a processing result which is likely to have low precision is low, the processing result being provided by the processing unit,
wherein the notification unit (56) is further configured to display a message indicating to the user a reason for which the precision of the sensor (51) has been degraded along with the processing result that is likely to have low precision, and/or to display a message indicating to the user a countermeasure against degradation of the precision of the sensor (51) along with the processing result that is likely to have low precision, or wherein the notification unit (56) is further configured to display the processing result by gradually changing a color, in case the processing result is likely to continuously have low precision.

2. The information processing apparatus according to claim 1,
wherein the processing unit is configured to execute processing based on a predetermined application.

3. The information processing apparatus according to claim 2,
wherein the application is an application configured to perform action recognition of the user, and
the determination unit (54) is configured to determine whether or not precision of a result of the action recognition based on the application has been degraded due to the precision of the sensor (51).

4. The information processing apparatus according to claim 1,
wherein the notification unit (56) is configured to display a message for allowing the user to recognize that the precision of the sensor (51) has been degraded, a message for allowing the user to recognize a reason for which the precision of the sensor (51) has been degraded, and/or a message for allowing the user to recognize a countermeasure against degradation of the precision of the sensor (51).

5. The information processing apparatus according to claim 1,
wherein the determination unit (54) is configured to calculate reliability of the sensor (51).

6. The information processing apparatus according to claim 5,
wherein the reliability is presented to the user in a form of a numerical value, an indicator, or a graph indicating a change in the reliability with elapse of time.

7. The information processing apparatus according to claim 1,
wherein the notification unit (56) is configured to provide a notification that the precision of the sensor (51) has been degraded along with a processing result provided by the processing unit.

8. The information processing apparatus according to claim 1,
wherein the notification unit (56) is configured to display a processing result that is likely to have low precision by adding a question mark to the processing result, to display the processing result in a paler color than a color for another processing result, or to display the processing result in a different color from the color for the other processing result, the processing result being provided by the processing unit.

9. The information processing apparatus according to claim 1,
wherein the notification unit (56) is configured to display a picture for allowing the user to recognize that the precision of the sensor (51) has been degraded along with the processing result that is likely to have low precision.

10. The information processing apparatus according to claim 2,
wherein a determination is performed by the determination unit for each application, and wherein a result of the determination performed by the determination unit (54) for each application is presented to the user.

11. An information processing method for an information processing apparatus including a sensor, the information processing method comprising the steps of:
performing processing using data from the sensor (51);
determining whether or not precision of the sensor has been degraded;
notifying a user that the precision of the sensor (51) has been degraded in a case in which it is determined that the precision of the sensor has been degraded;
performing display for allowing the user to recognize that there is a possibility that precision of a processing result which is likely to have low precision is low, the processing result being provided by the processing unit; and
displaying a message indicating to the user a reason for which the precision of the sensor (51) has been degraded along with the processing result that is likely to have low precision, and/or displaying a message indicating to the user a countermeasure against degradation of the precision of the sensor (51) along with the processing result that is likely to have low precision, or
displaying the processing result by gradually changing a color, in case the processing result is likely to continuously have low precision.

12. A computer program comprising instructions, which when the program is executed by an information processing apparatus according to claim 1, cause the information processing apparatus to carry out the method of claim 11.

## Patentansprüche

1. Informationsverarbeitungsvorrichtung, die aufweist:
einen Sensor (51);
eine Verarbeitungseinheit, die dazu ausgebildet ist, eine Verarbeitung unter Verwendung von Daten von dem Sensor (51) durchzuführen;
eine Bestimmungseinheit (54), die dazu ausgebildet ist, zu bestimmen, ob sich eine Genauigkeit des Sensors (51) verschlechtert hat oder nicht; und
eine Benachrichtigungseinheit (56), die dazu ausgebildet ist, einen Benutzer zu benachrichtigen, dass sich die Genauigkeit des Sensors (51) verschlechtert hat, in einem Fall, in dem bestimmt wird, dass sich die Genauigkeit des Sensors (51) verschlechtert hat,
wobei die Benachrichtigungseinheit (56) ferner dazu ausgebildet ist, eine Anzeige durchzuführen, um dem Benutzer zu ermöglichen, zu erkennen, dass eine Möglichkeit besteht, dass die Genauigkeit eines Verarbeitungsergebnisses, das voraussichtlich eine geringe Genauigkeit aufweist, gering ist, wobei das Verarbeitungsergebnis von der Verarbeitungseinheit bereitgestellt wird,
wobei die Benachrichtigungseinheit (56) ferner dazu ausgebildet ist, eine Nachricht anzuzeigen, die dem Benutzer einen Grund angibt, weshalb sich die Genauigkeit des Sensors (51) verschlechtert hat, zusammen mit dem Verarbeitungsergebnis, das voraussichtlich eine geringe Genauigkeit aufweist, und/oder eine Nachricht anzuzeigen, die dem Benutzer eine Gegenmaßnahme gegen Verschlechterung der Genauigkeit des Sensors (51) angibt, zusammen mit dem Verarbeitungsergebnis, das voraussichtlich eine geringe Genauigkeit aufweist, oder wobei die Benachrichtigungseinheit (56) ferner dazu ausgebildet ist, das Verarbeitungsergebnis durch sukzessives Ändern einer Farbe anzuzeigen, falls das Verarbeitungsergebnis voraussichtlich fortlaufend eine geringe Genauigkeit aufweist.

2. Informationsverarbeitungsvorrichtung nach Anspruch 1,
wobei die Verarbeitungseinheit dazu ausgebildet ist, die Verarbeitung auf Grundlage einer vorbestimmten Anwendung auszuführen.

3. Informationsverarbeitungsvorrichtung nach Anspruch 2,
wobei die Anwendung eine Anwendung ist, die dafür konfiguriert ist, eine Aktionserkennung des Benutzers durchzuführen, und
die Bestimmungseinheit (54) dazu ausgebildet ist, zu bestimmen, ob sich eine Genauigkeit eines Ergebnisses der Aktionserkennung, die auf der Anwendung basiert, aufgrund der Genauigkeit des Sensors (51) verschlechtert hat oder nicht.

4. Informationsverarbeitungsvorrichtung nach Anspruch 1,
wobei die Benachrichtigungseinheit (56) dazu ausgebildet ist, eine Nachricht anzuzeigen, um dem Benutzer zu ermöglichen, zu erkennen, dass sich die Genauigkeit des Sensors (51) verschlechtert hat, eine Nachricht, um dem Benutzer zu ermöglichen, einen Grund zu erkennen, weshalb sich die Genauigkeit des Sensors (51) verschlechtert hat, und/oder eine Nachricht, um dem Benutzer zu ermöglichen, eine Gegenmaßnahme gegen Verschlechterung der Genauigkeit des Sensors (51) zu erkennen.

5. Informationsverarbeitungsvorrichtung nach Anspruch 1,
wobei die Bestimmungseinheit (54) dazu ausgebildet ist, eine Zuverlässigkeit des Sensors (51) zu berechnen.

6. Informationsverarbeitungsvorrichtung nach Anspruch 5,
wobei die Zuverlässigkeit dem Benutzer in Form eines numerischen Wertes, eines Indikators oder eines Graphen präsentiert wird, der eine Änderung bei der Zuverlässigkeit mit fortschreitender Zeit anzeigt.

7. Informationsverarbeitungsvorrichtung nach Anspruch 1,
wobei die Benachrichtigungseinheit (56) dazu ausgebildet ist, eine Benachrichtigung bereitzustellen, dass sich die Genauigkeit des Sensors (51) verschlechtert hat, zusammen mit einem Verarbeitungsergebnis, das von der Verarbeitungseinheit bereitgestellt wird.

8. Informationsverarbeitungsvorrichtung nach Anspruch 1,
wobei die Benachrichtigungseinheit (56) dazu ausgebildet ist, ein Verarbeitungsergebnis, das voraussichtlich eine geringe Genauigkeit aufweist, durch Hinzufügen eines Fragezeichens zu dem Verarbeitungsergebnis anzuzeigen, das Verarbeitungsergebnis in einer blasseren Farbe als eine Farbe für ein anderes Verarbeitungsergebnis anzuzeigen oder das Verarbeitungsergebnis in einer anderen Farbe als der Farbe für das andere Verarbeitungsergebnis anzuzeigen, wobei das Verarbeitungsergebnis von der Verarbeitungseinheit bereitgestellt wird.

9. Informationsverarbeitungsvorrichtung nach Anspruch 1,
wobei die Benachrichtigungseinheit (56) dazu ausgebildet ist, ein Bild anzuzeigen, um dem Benutzer zu ermöglichen, zu erkennen, dass sich die Genauigkeit des Sensors (51) verschlechtert hat, zusammen mit dem Verarbeitungsergebnis, das voraussichtlich eine geringe Genauigkeit aufweist.

10. Informationsverarbeitungsvorrichtung nach Anspruch 2,
wobei eine Bestimmung von der Bestimmungseinheit für jede Anwendung durchgeführt wird und wobei ein Ergebnis der Bestimmung, die von der Bestimmungseinheit (54) für jede Anwendung durchgeführt wird, dem Benutzer präsentiert wird.

11. Informationsverarbeitungsverfahren für eine Informationsverarbeitungsvorrichtung, die einen Sensor enthält, wobei das Informationsverarbeitungsverfahren die folgenden Schritte umfasst:
das Durchführen einer Verarbeitung unter Verwendung von Daten von dem Sensor (51);
das Bestimmen, ob sich eine Genauigkeit des Sensors verschlechtert hat oder nicht;
das Benachrichtigen eines Benutzers, dass sich die Genauigkeit des Sensors (51) verschlechtert hat, in einem Fall, in dem bestimmt wird, dass sich die Genauigkeit des Sensors verschlechtert hat;
das Durchführen einer Anzeige, um dem Benutzer zu ermöglichen, zu erkennen, dass eine Möglichkeit besteht, dass die Genauigkeit eines Verarbeitungsergebnisses, das voraussichtlich eine geringe Genauigkeit aufweist, gering ist, wobei das Verarbeitungsergebnis von der Verarbeitungseinheit bereitgestellt wird; und
das Anzeigen einer Nachricht, die dem Benutzer einen Grund angibt, weshalb sich die Genauigkeit des Sensors (51) verschlechtert hat, zusammen mit dem Verarbeitungsergebnis, das voraussichtlich eine geringe Genauigkeit aufweist, und/oder
das Anzeigen einer Nachricht, die dem Benutzer eine Gegenmaßnahme gegen Verschlechterung der Genauigkeit des Sensors (51) angibt, zusammen mit dem Verarbeitungsergebnis, das voraussichtlich eine geringe Genauigkeit aufweist, oder
das Anzeigen des Verarbeitungsergebnisses durch sukzessives Ändern einer Farbe, falls das Verarbeitungsergebnis voraussichtlich fortlaufend eine geringe Genauigkeit aufweist.

12. Computerprogramm, das Anweisungen aufweist, die, wenn das Programm von einer Informationsverarbeitungsvorrichtung nach Anspruch 1 ausgeführt wird, bewirken, dass die Informationsverarbeitungsvorrichtung das Verfahren nach Anspruch 11 ausführt.

## Revendications

1. Appareil de traitement d'informations, comprenant :
un capteur (51) ;
une unité de traitement configurée pour réaliser un traitement à l'aide de données provenant du capteur (51) ;
une unité de détermination (54) configurée pour déterminer si une précision du capteur (51) s'est dégradée ou non; et
une unité de notification (56) configurée pour notifier à un utilisateur que la précision du capteur (51) s'est dégradée dans le cas où il est déterminé que la précision du capteur (51) s'est dégradée,
l'unité de notification (56) étant configurée en outre pour réaliser un affichage destiné à permettre à l'utilisateur de reconnaître qu'il existe une possibilité qu'une précision d'un résultat de traitement qui est susceptible de présenter une faible précision est faible, le résultat de traitement étant fourni par l'unité de traitement,
l'unité de notification (56) étant configurée en outre pour afficher un message indiquant à l'utilisateur une raison pour laquelle la précision du capteur (51) s'est dégradée conjointement avec le résultat de traitement qui est susceptible de présenter une faible précision et/ou pour afficher un message indiquant à l'utilisateur une contre-mesure contre une dégradation de la précision du capteur (51) conjointement avec le résultat de traitement qui est susceptible de présenter une faible précision, ou
l'unité de notification (56) étant configurée en outre pour afficher le résultat de traitement en modifiant progressivement une couleur dans le cas où le résultat de traitement est susceptible de présenter continuellement une faible précision.

2. Appareil de traitement d'informations selon la revendication 1,
dans lequel l'unité de traitement est configurée pour exécuter un traitement sur la base d'une application prédéterminée.

3. Appareil de traitement d'informations selon la revendication 2,
dans lequel l'application est une application configurée pour réaliser une reconnaissance d'action de l'utilisateur, et
l'unité de détermination (54) est configurée pour déterminer si une précision d'un résultat de la reconnaissance d'action sur la base de l'application s'est dégradée ou non du fait de la précision du capteur (51) .

4. Appareil de traitement d'informations selon la revendication 1,
dans lequel l'unité de notification (56) est configurée pour afficher un message destiné à permettre à l'utilisateur de reconnaître que la précision du capteur (51) s'est dégradée, un message destiné à permettre à l'utilisateur de reconnaître une raison pour laquelle la précision du capteur (51) s'est dégradée et/ou un message destiné à permettre à l'utilisateur de reconnaître une contre-mesure contre une dégradation de la précision du capteur (51).

5. Appareil de traitement d'informations selon la revendication 1,
dans lequel l'unité de détermination (54) est configurée pour calculer une fiabilité du capteur (51).

6. Appareil de traitement d'informations selon la revendication 5,
dans lequel la fiabilité est présentée à l'utilisateur sous forme d'une valeur numérique, d'un indicateur ou d'un graphe indiquant une variation de la fiabilité au fil du temps.

7. Appareil de traitement d'informations selon la revendication 1,
dans lequel l'unité de notification (56) est configurée pour fournir une notification que la précision du capteur (51) s'est dégradée conjointement avec un résultat de traitement fourni par l'unité de traitement.

8. Appareil de traitement d'informations selon la revendication 1,
dans lequel l'unité de notification (56) est configurée pour afficher un résultat de traitement qui est susceptible de présenter une faible précision en ajoutant un point d'interrogation au résultat de traitement, pour afficher le résultat de traitement dans une couleur plus pâle qu'une couleur pour un autre résultat de traitement ou pour afficher le résultat de traitement dans une couleur différente de la couleur pour l'autre résultat de traitement, le résultat de traitement étant fourni par l'unité de traitement.

9. Appareil de traitement d'informations selon la revendication 1,
dans lequel l'unité de notification (56) est configurée pour afficher une image destinée à permettre à l'utilisateur de reconnaître que la précision du capteur (51) s'est dégradée conjointement avec le résultat de traitement qui est susceptible de présenter une faible précision.

10. Appareil de traitement d'informations selon la revendication 2,
dans lequel une détermination est réalisée par l'unité de détermination pour chaque application, et dans lequel le résultat de la détermination réalisée par l'unité de détermination (54) pour chaque application est présenté à l'utilisateur.

11. Procédé de traitement d'informations pour un appareil de traitement d'informations comportant un capteur, le procédé de traitement d'informations comprenant les étapes suivantes :
réalisation d'un traitement à l'aide de données provenant du capteur (51) ;
détermination si une précision du capteur s'est dégradée ou non ;
notification à un utilisateur que la précision du capteur (51) s'est dégradée en cas de détermination que la précision du capteur s'est dégradée,
réalisation d'un affichage destiné à permettre à l'utilisateur de reconnaître qu'il existe une possibilité qu'une précision d'un résultat de traitement qui est susceptible de présenter une faible précision est faible, le résultat de traitement étant fourni par l'unité de traitement ; et
affichage d'un message indiquant à l'utilisateur une raison pour laquelle la précision du capteur (51) s'est dégradée conjointement avec le résultat de traitement qui est susceptible de présenter une faible précision et/ou affichage d'un message indiquant à l'utilisateur une contre-mesure contre une dégradation de la précision du capteur (51) conjointement avec le résultat de traitement qui est susceptible de présenter une faible précision, ou
affichage du résultat de traitement par modification progressive d'une couleur dans le cas où le résultat de traitement est susceptible de présenter continuellement une faible précision.

12. Programme d'ordinateur comprenant des instructions qui, lorsque le programme est exécuté par un appareil de traitement d'informations selon la revendication 1, amènent l'appareil de traitement d'informations à mettre en œuvre le procédé selon la revendication 11.
